# EUROPÄISCHE PATENTSCHRIFT

(11) **EP 3 465 145 B1**
(45) Veröffentlichungstag und Bekanntmachung des Hinweises auf die Patenterteilung: **02.09.2026**
(21) Anmeldenummer: 17728500.4
(22) Anmeldetag: 01.06.2017
(51) Int. Cl.: G01N 21/21, G01N 21/25, G01N 21/55

(54) **KONFIGURIERBARES RETROREFLEX-SENSORSYSTEM ZUR VERBESSERTEN CHARAKTERISIERUNG DER EIGENSCHAFTEN EINER PROBE**
CONFIGURABLE RETRO-REFLECTIVE SENSOR SYSTEM FOR THE IMPROVED CHARACTERIZATION OF THE PROPERTIES OF A SAMPLE
SYSTÈME DE DÉTECTION CONFIGURABLE À RÉTRO-RÉFLECTEUR PERMETTANT UNE MEILLEURE CARACTÉRISATION DES PROPRIÉTÉS D'UN ÉCHANTILLON

(30) Priorität: 02.06.2016 DE 102016209723
(43) Veröffentlichungstag der Anmeldung: 10.04.2019
(73) Patentinhaber: Fraunhofer-Gesellschaft zur Förderung der angewandten Forschung e.V., 80686 München (DE)
(72) Erfinder: HARTRUMPF, Matthias, 76187 Karlsruhe (DE); NEGARA, Christian, 50668 Köln (DE)
(74) Vertreter: Pfenning, Meinig & Partner mbB
(86) Internationale Anmeldenummer: PCT/EP2017/063248
(87) Internationale Veröffentlichungsnummer: WO 2017/207681

(56) Entgegenhaltungen:
- EP-A1- 1 619 465
- EP-A2- 2 597 451
- WO-A1-96/31752
- WO-A2-2010/026579
- DE-A1- 4 343 345
- NO-A1- 20 150 765
- US-A- 4 469 443
- US-A- 5 898 169
- US-A1- 2010 274 501
- US-A1- 2010 290 032
- US-A1- 2012 113 423

## Beschreibung

### I. Der Stand der Technik

Nachfolgend werden bereits einige auch für die Erfindungsbeschreibung verwendeten Bezugszeichen eingeführt; im Rahmen der gesamten Beschreibung werden somit für identische bzw. sich entsprechende Teile der beschriebenen Systeme identische Bezugszeichen verwendet.

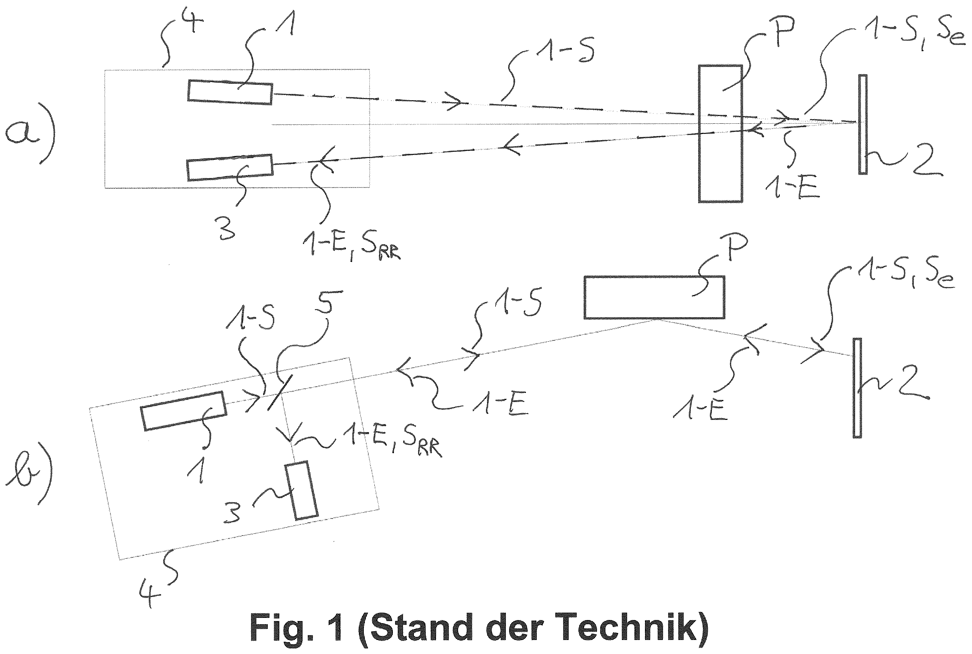

Retroreflex-Sensorsystems (alternativ auch als Retroreflex-Sensoren sowie abgekürzt auch als Sensoren bezeichnet) bzw. entsprechende Anordnungen gemäß dem Stand der Technik (vergleiche [STT1], [STT2] und [STT3]) sind grundsätzlich wie in Figur 1 gezeigt aufgebaut:
Ein Sender 1 beleuchtet die Probe P. Das auf die Probe auftreffende Licht gelangt entweder durch die Probe (Transmission) oder nach einer Reflexion an der Probe auf den Retroreflektor 2 und wird von dort auf dem gleichen Weg oder mit einem Strahlversatz in Richtung Sender 1 zurückreflektiert. Dabei ist es für das Funktionsprinzip des Sensors meist unerheblich, ob es durch den Reflektor zu einer Aufweitung der rückreflektierten Strahlen kommt, wie es zum Beispiel von Folienreflektoren bekannt ist. Der Empfänger 3 detektiert und analysiert die zurückreflektierte Strahlung. Er wird nachfolgend alternativ auch als Detektor bezeichnet. Sofern der Strahlversatz oder die Aufweitung des zurückreflektierten Lichtes es erlauben, kann der Empfänger neben dem Sender angeordnet sein (vgl. Figur 1a). Dies ist insbesondere dann möglich, wenn der Retroreflektor 2 zu einem definierten Strahlversatz führt oder nicht ideal ist und die auf ihn auftreffende Strahlung in einem Kegel zurückreflektiert. Andernfalls wird die zurückreflektierte Strahlung über einen Strahlteiler 5 zwischen Sender und Probe in Richtung Empfänger umgelenkt (vgl. Figur 1b). In den meisten Ausführungsformen sind Sender und Empfänger in ein und dasselbe Gehäuse 4 integriert (zu einem "Transceiver").

Bei der Transmission oder Spiegelung an der Probe bzw. am Objekt kann es zu Polarisationsänderungen der Strahlung kommen. Je nach Anwendung sind diese Polarisationsänderungen unerwünscht oder gerade das gesuchte Messsignal. Fälle bei denen diese Polarisationsänderungen unerwünscht sind, bei denen sie die Bestimmung der Objekteigenschaften also stören, sind beispielsweise:
- Detektion dekorativer Defekte (Einschlüsse, Kratzer o.ä.)
- Detektion oder Vermessung von Objektstrukturen (beispielsweise Außenkanten oder Konturen des Objekts, Grenzflächen im Inneren des Objekts, ...).

Fälle bei denen die Polarisationsänderungen ausgewertet werden sollen sind beispielsweise:
- Detektion von Spannungen im Material
- Detektion der Materialart oder Schichtdicke mittels Ellipsometrie.

Bei Anordnungen nach dem Stand der Technik sind diese (oder andere) unterschiedliche(n) Informationen über das Objekt in der Regel im Messsignal überlagert und können nicht oder nur bedingt voneinander unterschieden werden.

Zudem kann es bei der Verwendung von Reflektoren 2 mit Mikrostrukturen (Folien mit Mikroprismen, Mikroglaskugeln etc.) durch die Mikrostruktur des Reflektors zu erhöhtem Rauschen kommen.

Bei dem vorangehend beschriebenen Stand der Technik kommt es beispielsweise bei ellipsometrischen Messungen zu folgenden Einschränkungen:
- Einschränkung des eindeutigen Bereichs zur Bestimmung der ellipsometrischen Kenngrößen ψ, Δ.
- Einschränkung bei der gleichzeitigen Überprüfung auf dekorative Defekte bzw. Überlagerung der Signale dieser Defekte und der polarimetrischen oder ellipsometrischen Signale.
- Unbekannte Neigungswinkel der Probe in und senkrecht zur Einfallsebene.
- Rauschen durch die Mikrostruktur des Reflektors und / oder Speckle.

### Stand der Technik:

[STT1] WO 99/41568 A1 = Anmeldung PCT/EP2011/004553 bzw. EP 1056987.
[STT2] WO 2012/038036 A1
[STT3] "Ellipsometrie an gekrümmten Oberflächen", Conference Paper, November 2014, Forum Bildverarbeitung 2014, Regensburg, DOI: 10.5445/KSP/1000043608.
[STT4] "Simultaneous measurement of surface geometry and material distribution by focusing ellipsotopometry", U. Neuschaefer-Rube und W. Holzapfel, APPLIED OPTICS, Vol. 41, No. 22, 1 August 2002.
[STT5] R. M. A. Azzam "Division-of-amplitude Photopolarimeter (DOAP) for the Simultaneous Measurement of All Four Stokes Parameters of Light.", Optica Acta: International Journal of Optics, 29(5): 685-689, 1982.
[STT6] US 2010/290032 A1
[STT7] US 5 898 169 A
[STT8] US 2012/113423 A1
[STT9] US 2010/274501 A1
[STT10] WO 2010/026579 A2
[STT11] NO 20 150765A1
[STT12] EP 2 597 451 A2
[STT13] DE 43 43345A1
[STT14] WO 9631752
[STT15] EP 1 619 456 A1
[STT16] US 4 469 443 A
[STT14]- [STT16] offenbaren optische Messsysteme mit Retroreflektor, bei denen die Polarisation moduliert wird.

### II. Einführung in die sowie Aufgabe der vorliegenden Erfindung

Ausgehend vom Stand der Technik ist es die Aufgabe der vorliegenden Erfindung, eine verbesserte optische Charakterisierung einer Probe bzw. eines Objekts in Retroreflexanordnung zu ermöglichen. Dazu soll ein erfindungsgemäßes retroreflektorbasiertes Sensorsystem zur Verfügung gestellt werden.

Diese Aufgabe wird durch ein Sensorsystem gemäß Anspruch 1 gelöst. Vorteilhafterweise realisierbare Ausführungsformen lassen sich den abhängigen Patentansprüchen entnehmen.

Entsprechende Verfahren (und Verwendungen) ergeben sich entsprechend in dem Fachmann offensichtlicher Abwandlung der Patentansprüche (beispielsweise gemäß Anspruch 1, indem die Probe mittels Strahlung im Senderstrahlengang bestrahlt wird, ... bis schließlich die Strahlung S_{RR} vom Empfänger detektiert wird und daraus zum optischen Charakterisieren der Probe Messwerte gewonnen und ausgewertet werden, wobei dann besagtes Gewinnen und/oder Auswerten dadurch verbessert wird, dass besagtes oder besagte Konfigurationsmittel vorgesehen wird/werden).

Nachfolgend wird die vorliegende Erfindung zunächst in allgemeiner Form, dann auch anhand mehrerer einzelner Ausführungsbeispiele im Detail beschrieben. In Bezug auf die Ausführungsbeispiele ist es gemäß der Anspruchsstruktur möglich, einzelne der gezeigten Merkmale auch wegzulassen oder einzelne der gezeigten Merkmale auch anders mit anderen der gezeigten Merkmale (auch beispielübergreifend) zu kombinieren.

Gegenstand der vorliegenden Erfindung ist ein konfigurierbarer Sensor zur verbesserten optischen Charakterisierung einer Probe in Retroreflexanordnung.

Eine solche verbesserte Charakterisierung wird findungsgemäß durch das nachfolgend mit dem Bezugszeichen versehene Konfigurationsmittel K3 erreicht, das in vorzuziehenden Ausführungsbeispielen mit einem einzelnen oder mehreren der nachfolgend mit den Bezugszeichen K1, K2, K4 bis K6 versehenen Zusatz-Konfigurationen bzw. Konfigurationsmitteln kombiniert wird:
- Konfigurationsmittel K1: Eine Bewegung des Reflektors während der Messung durch einen Aktor.
- Konfigurationsmittel K2: Anordnen (einer) optischen/r Komponente(n) zwischen Probe und Retroreflektor, welche die Polarisation, Richtung oder die Intensität der Strahlung ändert/n. Technisch oft gleichwertig kann alternativ ein Retroreflektor verwendet werden, der die Polarisation, die Intensität, die Richtung und/oder den Versatz der zurückreflektierten Strahlung in definierter (also dem Benutzer bekannter) Art und Weise ändert.
- Konfigurationsmittel K3: Anordnen (mindestens) eines Modulators oder Umschalters für den Polarisationszustand, die Wellenlänge und/oder die Kohärenz oder die Abstrahlrichtung der Beleuchtung. In einigen Ausführungen der Erfindung ist es dabei vorteilhaft eine Modulation mehrerer der oben genannten Parameter gleichzeitig durchzuführen. Ein Beispiel hierfür ist die Beleuchtung mit linkszirkular polarisierter Strahlung einer ersten Wellenlänge λ₁, die alternierend zu einer rechtszirkular polarisierten Beleuchtung bei einer zweiten Wellenlänge λ₂ geschaltet wird. Dabei können die Wellenlängen λ₁ oder λ₂ im empfindlichen Bereich des Detektors oder außerhalb dieses Bereichs liegen (so dass beispielsweise (polarisierte) Fluoreszenz oder nichtlineare optische Effekte an der Probe auswertbar sind).
- Konfigurationsmittel K4: Anordnen von einem oder mehreren Element(en) zur Änderung der Polarisation des gesamten Empfängerstrahlengangs bzw. zur spektralen Aufspaltung des Empfängerstrahlengangs, welche(s) dabei aber vorzugsweise die Polarisation und die spektralen Eigenschaften des Senderstrahlengangs unbeeinflusst lässt/lassen.
- Konfigurationsmittel K5: Erweitern des Empfängers zu einem Detektor bzw. Verwenden eines Empfänger, der den kompletten Stokes- oder Jonesvektor der einfallenden Strahlung - auch ohne Nebenbedingung durch die Kohärenz - bestimmt. Alternativ und technisch gleichwertig, kann ein entsprechender Ersatz eines bereits vorgesehenen oder vorhandenen Detektors erfolgen.
- Konfigurationsmittel K6: Verwendung einer Datenquelle, z.B. CAD-Modell, oder Anordnen mindestens eines zusätzlichen weiteren Detektors bzw. Sensorsystems für die Berücksichtigung oder Erfassung von weiteren Probeneigenschaften wie z.B. der Geometriedaten der Probe. Aus diesen zusätzlichen Daten können der Einfallswinkel der Strahlung auf die Probenoberfläche und/oder der Neigungswinkel der Probe gegen das Sensor-Koordinatensystem bestimmt werden. Mit Hilfe dieser Informationen können beispielsweise aus den ellipsometrischen Messwerten ψ, Δ der Brechungsindex n und der Extinktionskoeffizient k der Probe bestimmt werden. Alternativ ist es in vielen Fällen auch möglich, die Geometriedaten aus den ellipsometrischen Daten (Messgrößen des Detektors) selbst zu bestimmen. Das Verfahren ist als Ellipsotopography eingeführt. Siehe "Simultaneous measurement of surface geometry and material distribution by focusing ellipsotopometry" eingeführt, siehe [STT4]. In diesem Fall kann erfindungsgemäß eine Auswertestufe vorgesehen werden, um aus den Messwerten u.a. mit Hilfe der Fresnelschen Formeln für die Reflexionskoeffizienten die Geometrie der Probe zu bestimmen.
- Als weitere(s) Konfigurationsmittel (diese werden erfindungsgemäß auch als Konfigurationsmittel K7 bezeichnet) kann/können (ein) Mittel zur automatischen Kalibrierung der Messwerte vorgesehen sein. Diese(s) Konfigurationsmittel kann/können z.B. (ein) polarisationserhaltende(r) oder depolarisierende(r) Retroreflektor(en) oder ein reflektierendes Objekt bzw. Reflektor mit genau bekannter Reflexionscharakteristik sein. Der/die Retroreflektor(en) kann/können in einem Teil des Sendestrahlengangs eingebracht sein oder in einen Teil des Sendestrahlengangs einschwenkbar sein. Der/die Retroreflektor(en) kann/können im Gehäuse des Transceivers (bzw. einer kombinierten Sende- und Empfangseinheit) positioniert werden oder auch außerhalb dieses Gehäuses, in letzterem Fall bevorzugt unmittelbar neben der Probe (im Falle einer Reflexionsanordnung - im Falle einer Transmissionsanordnung kann ein nicht im Schatten der Probe liegender Raumbereich des Retroreflektors verwendet werden).

Abhängig von der jeweils zu lösenden Messaufgabe kann ein(e) Konfiguration(smittel) allein oder eine Kombination mehrerer oder aller Konfigurationen bzw. Mittel vorteilhaft sein, um die erfindungsgemäße Aufgabe zufriedenstellend (besser noch: optimal) zu lösen.

### III. Zum Schutzumfang der Erfindung

Ein erfindungsgemäßes retroreflektorbasiertes Sensorsystem lässt sich Anspruch 1 entnehmen. Bestimmte Ausführungsformen sind in den abhängigen Ansprüchen angegeben. Alle hierin beschriebenen Ausführungsformen, Beispiele, Aspekte, Verfahren, Verwendungen und dergleichen, die nicht in den Geltungsbereich der Ansprüche fallen, dienen nur zur Veranschaulichung.

Dabei ist die Probe nicht Teil des Systems, d. h., das System besteht aus den anderen genannten Komponenten und hat einen Probenbereich, in dem die besagte Probe so positionierbar ist, dass das im Anspruch Beschriebene realisiert wird. Der Begriff "optisch" und der Begriff der "Strahlung" beziehen sich in der Regel auf sichtbares Licht, also auf Licht mit (einer) Wellenlänge(n) im Bereich zwischen etwa 350 nm und 780 nm. Erfindungsgemäß ist es aber auch denkbar, Strahlungsquellen (als Sender) bzw. Strahlungen in anderen Wellenlängenbereichen, insbesondere im UV-Bereich unterhalb von 350 nm oder auch im Infrarotbereich oberhalb von 780 nm, zu nutzen.

Es ist sowohl eine Transmissionsanordnung, als auch eine Reflexionsanordnung der Probe möglich (vgl. auch die Ausführungsbeispiele nachfolgend). Die Messwerte können insbesondere Intensitäts(mess)werte und/oder Polarisations(mess)werte der Strahlung sein.

Sofern nichts anderes gesagt ist, ist der Sendestrahlengang der Strahlungsweg vom Sender bis zum Auftreffen auf den Retroreflektor. Entsprechend ist der Empfangsstrahlengang der Strahlungsweg vom Retroreflektor (nach der Rückreflexion an diesem) wieder zurück in Richtung auf den Sender hin und bis zum Auftreffen auf den Empfänger. Dabei ist der Fall umfasst, dass eventuell nur echte Anteile der Strahlung die nächste optisch wirksame Stufe (bzw. das nächste optisch wirksame Mittel wie z. B. die Probe, den Retroreflektor, ein
Retroreflektor, ein
Konfigurationsmittel oder dergleichen) erreichen. Beispielsweise werden in der Regel nur Teile der auf die Probe einfallenden Strahlung nach ihrer Reflexion an der Probe bzw. ihrer Transmission durch die Probe den Retroreflektor auch wirklich erreichen (so können Strahlungsanteile an/in der Probe beispielsweise durch Absorption, Streuung, ... verlorengehen). Ebenso ist es möglich, dass Teile der an der Probe reflektierten Strahlung den Retroreflektor gar nicht erreichen, da sie neben dem Retroreflektor vorbeigehen bzw. vorbeigestrahlt werden.

Der Sender kann einen punktförmigen oder ein- oder zweidimensionalen Bereich der Probe (bevorzugt einen Punkt, eine Linie oder eine Fläche dieser Probe) beleuchten. Der Empfänger (Detektor) empfängt also diejenige Strahlung bzw. diejenigen Strahlungsanteile, die vom Retroreflektor zurückreflektiert werden und die - auf dem gesamten Strahlengang, also dem Senderstrahlengang zuzüglich dem Empfängerstrahlengang gesehen - (mindestens) zweifach an der Probe reflektiert werden (oder die die Probe zweifach in Transmission durchstrahlt haben).

In der Regel sind die optischen Achsen im Beleuchtungsstrahlengang (also dem Senderstrahlengang) und im Empfangsstrahlengang (also vom Retroreflektor wieder zurück hin zum Detektor) zumindest abschnittsweise übereinstimmend bzw. haben zumindest abschnittsweise annähernd dieselbe Ausrichtung. Das an der Probe reflektierte und/oder das durch die Probe transmittierte Licht kann vom Retroreflektor prinzipiell (im Empfangsstrahlengang) auf dem gleichen, also dem identischen optischen Weg zurückreflektiert werden. Dies geschieht beispielsweise bei Verwendung eines Folienreflektors als Retroreflektor. Ebenso ist es aber möglich, dass das vom Retroreflektor zurückgeworfene Licht mit einem Parallelversatz (bezogen auf den Senderstrahlengang) zurückreflektiert wird, also der Empfangsstrahlengang zumindest abschnittsweise beabstandet vom und parallel zum Senderstrahlengang (bzw. Abschnitten desselben) verläuft. Dabei kann im Empfangsstrahlengang (wiederum relativ zum Senderstrahlengang gesehen) auch eine in der Regel geringfügige Aufweitung vorliegen.

Vorteilhafterweise realisierbare Merkmale lassen sich Anspruch 2 entnehmen.

Dabei ist bevorzugt nur genau eines (besonders bevorzugt: der Retroreflektor) der im Anspruch beschriebenen Elemente bewegbar. Das Bewegen des besagten Elements (bzw. der Elemente) wie beispielsweise des Retroreflektors erfolgt vorzugsweise durch einen Aktor. Beispielsweise kann ein Motor, ein Vibrator oder dergleichen als Aktor eingesetzt werden. Die Bewegung kann als Rotation, als Vibration oder auch als schnelle Hin- und Herbewegung entlang mindestens einer Achse (oder auch als Kombination solcher Bewegungen) erfolgen.

Weitere vorteilhafterweise realisierbare Merkmale lassen sich Anspruch 3 entnehmen.

Die Anordnung (eines) solchen/r Elemente(s) erfolgt in der Regel an definierter/n Position (en) im Senderstrahlengang und/oder im Empfangsstrahlengang. Beispielsweise kann ein solches Element im Senderstrahlengang zwischen Sender und Probe angeordnet werden. Ein (anderes) Element kann stattdessen oder zusätzlich dazu im Senderstrahlengang und im Empfangsstrahlengang zwischen Probe und Retroreflektor angeordnet sein. Stattdessen oder zusätzlich zu dem/den vorangehend genannten Element(en) kann im Empfangsstrahlengang (also den Senderstrahlengang bzw. die Strahlung desselben unbeeinflusst lassend) ein (weiteres) solches Element zwischen der Probe und dem Empfänger angeordnet werden.

Ein oder mehrere solches/r Element(e) kann/können auch (eine) zusätzliche Lichtquelle (n) sein, die beispielsweise in einem oder in mehreren Teilstrahlengang/-gängen des Senders angeordnet ist/sind oder über einen oder mehrere Strahlteiler in (einen) solche(n) Teilstrahlengang/-gänge eingekoppelt wird/werden.

Bei einem solchen optischen Element kann es sich auch um den Retroreflektor selbst handeln. Beispiel hierfür ist ein Retroreflektor, der den Polarisationszustand bzw. die Polarisation der auftreffenden und wieder zurückreflektierten Strahlung definiert (also in für den Benutzer des retroreflektorbasierten Sensorsystems bekannter) Art und Weise ändert. Ein weiteres Beispiel ist ein Retroreflektor, der einen definierten Versatz zwischen der Strahlung des Senderstrahlengangs und der Strahlung im Empfangsstrahlengang bewirkt.

Weitere vorteilhafterweise realisierbare Merkmale lassen sich Anspruch 4 entnehmen.

Hier (wie auch für alle anderen Ausführungsvarianten des erfindungsgemäßen Sensorsystems) gilt, dass das Sensorsystem, insbesondere dessen Auswerteeinheit, rechnergestützt, also computergestützt oder mikroprozessorgestützt, arbeiten kann.

Das Sensorsystem, insbesondere dessen Auswerteeinheit, kann also ein(en) entsprechenden/r Server PC oder Mikrocontroller (mit geeignetem Programm- und Datenspeicher) umfassen oder sein.

Zum Auswerten können geeignete Auswerteprogramme im Programmspeicher (fest) hinterlegt sein bzw. in den Programmspeicher geladen werden. Diese Auswerteprogramme sind zum Auswerten der Messwerte bzw. von aus diesen generierten Daten (die im Datenspeicher abgelegt werden können bzw. abgelegt sein können) ausgebildet.

Weitere vorteilhafterweise realisierbare Merkmale lassen sich Anspruch 5 entnehmen.

Dabei wird der Informationsspeicher nachfolgend alternativ auch als Datenquelle bezeichnet.

Weitere vorteilhafterweise realisierbare Merkmale lassen sich Anspruch 6 entnehmen.

Dergestaltige Mittel können beispielsweise sein:
1. Im Falle, dass der Sender und der Empfänger in einem gemeinsamen Gehäuse positioniert sind (insbesondere: falls der Sender und der Empfänger als Laserscanner in/mit einem solchen gemeinsamen Gehäuse ausgebildet sind), ein weiterer Retroreflektor innerhalb dieses gemeinsamen Gehäuses, wobei mit dem weiteren Retroreflektor ein Teil der vom Sender emittierten Strahlung (insbesondere: ein Teil der Scan-Linie besagten Laserscanners) unmittelbar (in der Regel also vor dem Verlassen des gemeinsamen Gehäuses) in den Empfänger zurückreflektiert wird (also ohne Probenberührung).
2. Ein Teil des im Senderstrahlengang hinter der Probe positionierten Retroreflektors, wobei besagter Teil nicht durch die Probe verdeckt wird.
3. In erfindungsgemäßen Systemen in Reflexionsanordnung (in der Regel also nicht bei Transmissionsanordnungs-Sensorsystemen) ein oder mehrere im Bereich oder neben der Probe so angeordnete(s) Referenzobjekt(e), so dass ein Teil der Strahlung des Senderstrahlengangs auf diese(s) Referenzobjekt(e) fällt, daran reflektiert wird und letztgenannter, reflektierter Teil den Retroreflektor trifft.

Mit diesem/n Mittel(n) können insbesondere Intensitäten oder Polarisationswerte als Messwerte normiert werden.

Weitere vorteilhafterweise realisierbare Merkmale lassen sich Anspruch 7 entnehmen.

Dabei können abgetastete Konfigurationsmittel insbesondere die bereits erwähnten Referenzobjekte sein.

Weitere vorteilhafterweise realisierbare Merkmale lassen sich Anspruch 8 entnehmen.

Der Strahlversatz kann dabei insbesondere so realisiert werden, dass sich die Strahlung entlang des Senderstrahlengangs und des Empfangsstrahlengangs zumindest abschnittsweise parallel ausbreitet. Sofern besagter Strahlversatz und/oder eine eventuell vorhandene, auf die Länge vom Senderstrahlengang und Empfangsstrahlengang (zusammengenommen) endliche Strahlaufweitung es erlaubt, kann der Empfänger neben dem oder (in der Regel geringfügig) beabstandet vom Sender angeordnet sein.

Weitere vorteilhafterweise realisierbare Merkmale lassen sich Anspruch 9 entnehmen.

Gemäß der ersten Variante dieses Anspruchs ist es auch (beispielsweise durch eine geeignete Anordnung von zusätzlichen Strahlteilern) möglich, die Strahlung mehr als zweimal, beispielsweise viermal oder gar sechsmal, an der Probe zu reflektieren, bevor sie als Strahlung S_{RR} detektiert wird.

Gemäß der zweiten Variante dieses Anspruchs ist es auch (beispielsweise bei geeigneter Anordnung von zusätzlichen Strahlteilern, die beispielsweise jeweils leicht gekippt zueinander angeordnet werden) möglich, die Strahlung mehr als zweimal, beispielsweise viermal oder sechsmal, durch die Probe zu transmittieren, bevor sie als Strahlung S_{RR} detektiert wird.

In beiden Varianten ist es dabei in der Regel so, dass jeweils nur ein Anteil der reflektierten bzw. transmittierten Strahlung pro Reflexions- oder Transmissionsvorgang reflektiert bzw. transmittiert wird. Mit anderen Worten treten in der Regel pro Vorgang (geringfügige) Verluste an Strahlanteilen durch ungerichtete Streuung, Absorption, .... auf.

Weitere vorteilhafterweise realisierbare Merkmale sind in Anspruch 10 beschrieben.

Das Gehäuse kann eine gemeinsame Strahleintritts- und Strahlaustrittsöffnung aufweisen. Diese ist in der Regel geeignet ausgebildet, um sowohl den Austritt der vom Sender ausgesandten Strahlung als auch den Empfang der vom Retroreflektor über die Probe wieder rückreflektierten Strahlung durch den Empfänger zu ermöglichen.

Weitere vorteilhafterweise realisierbare Merkmale lassen sich Anspruch 11 entnehmen.

Das Scansystem kann insbesondere ein Laserscan(ner)system bzw. ein Laserscanner sein. Das Scannen kann dabei vermittels eines oder mehrerer beweglicher/n Spiegel(s) erfolgen. Beispielsweise lassen sich ein- oder zweidimensionale Galvanometerscanner als Spiegelsysteme zum Scannen einsetzen.

Die Figuren - wie auch die Beschreibung - zeigen bzw. beschreiben die wesentlichen Merkmale der Erfindung. Der Klarheit halber sind unwesentliche, für den Fachmann selbstverständliche, d.h. die prinzipielle Funktion nicht berührende (rein abbildende oder einen oder mehrere Teilstrahlengang bzw. Teilstrahlengänge umlenkende) optische Elemente weder eingezeichnet noch in der Beschreibung erwähnt.

Die in den nachfolgenden Ausführungsbeispielen gezeichneten Strahlengänge funktionieren bereits in Realisierungen ohne spezielle abbildende oder strahlformende Elemente (wie z.B. Linsen, Blenden, Filter oder dergleichen) - beispielsweise bei Verwendung eines kollimierten Lasers (als Strahlenquelle) und eines relativ großen Detektors (Empfängers). Es ist offensichtlich, dass schon mit der Verwendung einer einfachen Linse die Größe des vermessenen Oberflächen- oder Volumenelements der Proben sowie die Effizienz des Strahlengangs positiv beeinflusst werden können. Ebenso offensichtlich ist der Vorteil zusätzlicher Blenden und Filter in den Strahlengängen. Dem Fachmann ist daher klar, dass das erfindungsgemäße Prinzip auch in einer Form realisierbar ist, in der die in den nachfolgenden Ausführungsbeispielen gezeigten Strahlengänge lediglich Teilstrahlengänge komplexerer optischer Anordnungen bzw. optischer Systeme (z.B. zusätzliche strahlformende Elemente umfassender und/oder linienförmig oder flächig abtastender oder abbildender Systeme - z.B. eindimensionaler oder zweidimensionaler Laserscanner) sind.

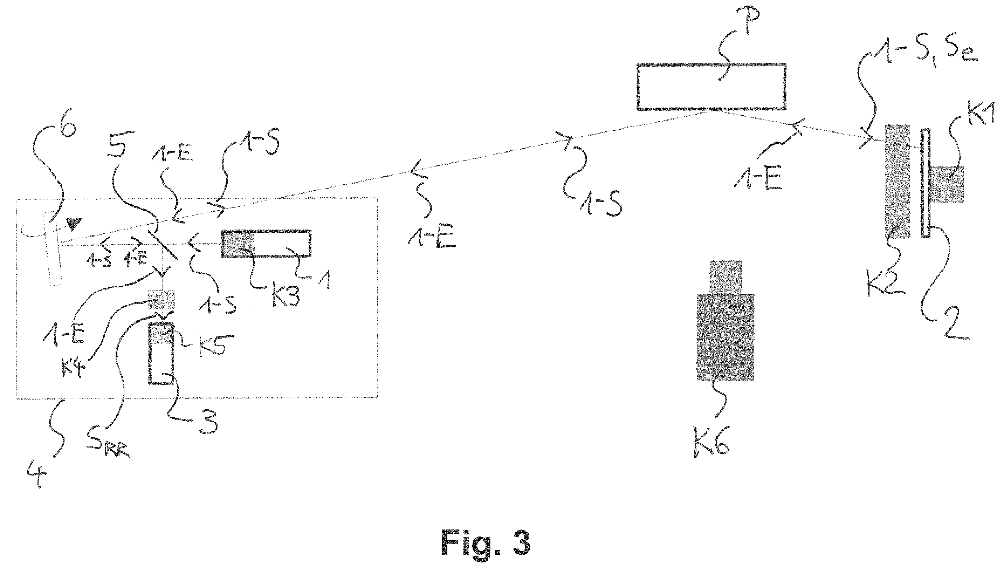

Beispiel (mit Bezug auf das nachfolgend beschriebene Ausführungsbeispiel aus Figur 3): Die Ablenkeinheit kann mehrere Elemente (drehbare(r) bzw. rotierbare(r) Spiegel, abbildende(r) Spiegel, eine oder mehrere Linse(n), ein oder mehrere holografische Elemente etc.) aufweisen, um z.B. eine eindimensionale oder zweidimensionale Abtastung (Laserscan, bevorzugt im Zeitmultiplex) oder Abbildung der Probenoberfläche zu erlauben. Genauso klar ist dem Fachmann, dass zusätzliche Linsen und Blenden im Strahlengang die Effizienz der Strahlengänge und die Größe der abgetasteten Oberflächenelemente der Probe beeinflussen können. Man würde dennoch für jeden Lichtstrahl die gleiche Wirkung der Konfigurationen erhalten, somit ist der erfindungsgemäße Grundgedanke wiedererkennbar. Auch das Einbringen von Filtern ist möglich, z.B. zur Fremdlichtkompensation.

Kurz gesagt: Es können erfindungsgemäß nahezu beliebige Strahlengänge verwirklicht werden, nahezu beliebige strahlformende Elemente zusätzlich in den Strahlengang eingebracht werden und/oder nahezu beliebige Retroreflektor-Konfigurationen und -formen verwendet werden.

### IV. Ausführungsbeispiele, mögliche Ausführungsformen und Vorteile der Erfindung

### IV.1. Grundsätzliches zu den erfindungsgemäß möglichen Systemaufbauten

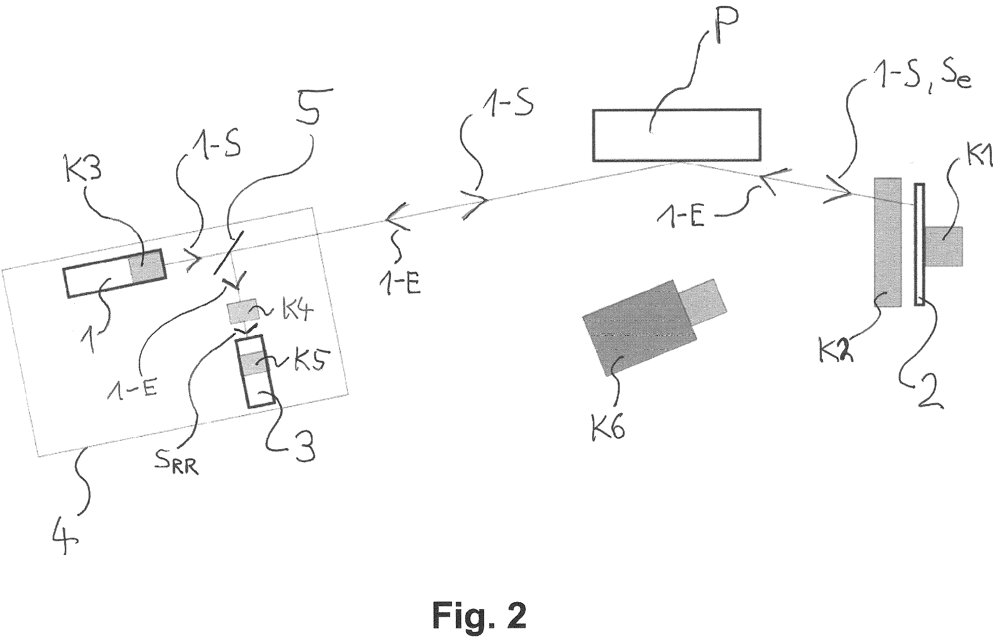

Nachfolgend werden anhand der Figuren 2 bis 10 verschiedene Konfigurationsbeispiele, also Ausführungsbeispiele für Sensorsysteme gemäß der Erfindung, beschrieben.

So zeigt Fig. 2 einen möglichen prinzipiellen Aufbau der Erfindung, bei dem neben dem Konfigurationsmittel K3 ein weiteres ein Konfigurationsmittel, mehrere weitere Konfigurationsmittel oder auch alle Konfigurationsmittel K1 bis K6 wie nachfolgend beschrieben z. B. im Strahlengang positioniert und/oder auch als Teil einzelner Elemente des Systems integriert werden können.

Das/die Sensorsystem(e) gemäß Fig. 2 weist/weisen einen strahlungsemittierenden Sender 1 (hier: Laser emittierend mit der Wellenlänge λ) auf. Der Sender 1 wird nachfolgend auch als Beleuchtung bezeichnet. An ihm oder in ihm integriert kann das dritte Konfigurationsmittel K3 ausgebildet sein, d. h., gemäß Fig. 2 kann eine Konfiguration K3 (alleine oder zusammen mit einer, mehreren oder allen der anderen Konfigurationen K1 bis K2 sowie K4 bis K6) realisiert werden.

Der Laser 1 emittiert Licht in den Senderstrahlengang 1-S, das auf einen Strahlteiler 5 fällt und durch diesen hindurch transmittiert wird. Die Transmissionseigenschaften des Strahlteilers (Transmissionsgrad, Veränderung der Polarisation etc.) können an die Messaufgabe angepasst sein. Zur genauen Auswertung der Messsignale müssen sie lediglich bekannt sein oder durch eine Messung ermittelt werden.

Im Sendestrahlengang 1-S fällt die Strahlung dann auf die Probe P und wird an dieser gemäß des Reflexionsgesetzes (Einfallswinkel = Ausfallswinkel) spiegelnd reflektiert.

Diese reflektierte Strahlung fällt im Strahlengang 1-S auf ein zweites Konfigurationsmittel K2 (falls dieses, wie in Fig. 2 gezeigt, tatsächlich realisiert bzw. vor dem Retroreflektor 2 positioniert ist - Konfiguration K2) und anschließend auf einen Retroreflektor 2 bzw. unmittelbar auf den Reflektor 2. Das durch das Konfigurationsmittel K2 hindurchtretende Licht bzw. die auf den Retroreflektor 2 einfallende Strahlung Sₑ wird am Retroreflektor 2 in sich zurückreflektiert, also in den Empfangsstrahlengang 1-E zurückreflektiert, wobei letzterer 1-E bis hin zum Auftreffen auf den Strahlteiler 5 identisch zum Senderstrahlengang 1-S verläuft. Mit anderen Worten läuft die vom Reflektor 2 zurückreflektierte Strahlung in entgegengesetzter Richtung den Senderstrahlengang 1-S entlang, trifft zum zweiten Mal auf die Probe P, wird an dieser zum zweiten Mal gemäß des Reflexionsgesetzes spiegelnd reflektiert und trifft somit nach Eintritt in das gemeinsame Gehäuse 4 des Senders 1 und des Empfängers 3 erneut auf den Strahlteiler 5.

Der Strahlteiler 5 reflektiert gemäß seinen optischen Eigenschaften einen Teil der ankommende Empfangsstrahlung 1-E in Richtung zum Empfänger 3 hin. Die Reflexions- und Transmissionseigenschaften des Strahlteilers (Transmissionsgrad, Reflexionsgrad, Änderung der Polarisationseigenschaften in Transmission und Reflexion etc.) können an die Messaufgabe angepasst sein. Zur genauen Auswertung der Messsignale müssen sie lediglich bekannt sein oder durch eine Messung ermittelt werden.

Strahlteiler 5, Sender 1 und Empfänger 3 sind hier im Gehäuse 4 um 90° zueinander gedreht angeordnet. Die am Teiler 5 reflektierte Empfangsstrahlung 1-E trifft auf das vierte Konfigurationsmittel K4, sofern dieses wie in Fig. 2 gezeigt implementiert ist, und die vom Mittel K4 modifizierte Empfangsstrahlung trifft als vom Empfänger 3 zu detektierende Strahlung S_{RR} auf den Empfänger 3.

Wie Fig. 2 zeigt, können zusätzlich zu dem Konfigurationsmittel K3 noch die folgenden Konfigurationsmittel vorgesehen sein bzw. Konfigurationen realisiert werden:
- Konfigurationsmittel K1 (erstes Konfigurationsmittel) in/am Retroreflektor bzw. als Retroreflektor (siehe insbesondere nachfolgende Beschreibung).
- Konfigurationsmittel K5 im/am Empfänger 3 (siehe insbesondere nachfolgende Beschreibung).
- Konfigurationsmittel K6, das hier das Auftreffen der Strahlung Sₑ auf dem Reflektor 2 und/oder der Strahlung 1-S auf dem Konfigurationsmittel K2 mittels einer Kamera abbildet (siehe insbesondere nachfolgende Beschreibung).

Der innere Aufbau des Empfängers 3 hängt von der zu lösenden Messaufgabe ab. Im einfachsten Fall eines Punktsensors zur Detektion von dekorativen Defekten kann es sich um eine Fotodiode oder einen Photomultiplier handeln. Er kann aber auch der Abb. 20.6 aus STT3 folgen (siehe in dieser Figur den Strahlverlauf rechts desjenigen nicht-polarisationsändernden Strahlteilers, auf den die gestrichelte, mit "Eingangsstrahl" bezeichnete Strahlung fällt).

Die genauen optischen Eigenschaften (Transmission, Reflexion, Polarisationseigenschaften, etc.) der optischen Elemente in Fig. 2 können in weiten Grenzen für die zu lösende Messaufgabe optimiert werden. In der Regel müssen sie für eine zufriedenstellende Lösung der Aufgabe lediglich hinreichend genau bekannt sein, so dass sie in der Auswertung der Signale entsprechend berücksichtigt werden können.

Fig. 2 zeigt also beispielhaft die Konfigurationen K1 bis K6 zur optimalen Anpassung eines Retroreflex-Sensorsystems an eine Messaufgabe bzw. zur erweiterten Charakterisierung von Proben am Beispiel eines Punktmesssystems. Dabei können zusätzlich zur Konfiguration K3 die erfindungsgemäßen Zusatz-konfigurationen K1, K2 und/oder K4 bis K6 eingesetzt werden:
- K1: Aktor zur Bewegung des Retroreflektors.
- K2: Zusätzliches optisches Element, das die Polarisation, Richtung oder die Intensität der Strahlung ändert.
- K3: Modulator oder Umschalter für den Polarisationszustand, die Wellenlänge, die Kohärenz oder die Abstrahlrichtung der Beleuchtung.
- K4: Ein oder mehrere optische Elemente zur Änderung der Polarisation und/oder zur spektralen Aufspaltung des Empfangsstrahlengangs und/oder zur Auswahl der Wellenlänge des Detektors (z.B. AOTF).
- K5: Erweiterter Detektor, der den Jonesvektor oder den kompletten Stokesvektor der einfallenden Strahlung - auch ohne Nebenbedingung durch die Kohärenz bzw. vollständige Polarisation - bestimmt und ggf. diffraktive Elemente zur spektralen Aufspaltung sowie Punkt, Linien oder Flächensensoren beinhaltet.
- K6: Zusätzlicher Sensor zur Bestimmung der Objektgeometrie bzw. des Einfallswinkels der Strahlung zur Objektoberfläche und/oder des Drehwinkels der Probenoberfläche zur Detektor-Vorzugsrichtung und/oder der Höhe der untersuchten Probenoberfläche.

Fig. 3 zeigt ein alternatives erfindungsgemäßes System, das grundsätzlich wie in Fig. 2 gezeigt aufgebaut ist, so dass nachfolgend nur die Unterschiede beschrieben werden. Gezeigt ist ein Transceiver (also Sender 1 und Empfänger 2 im selben Gehäuse 4), der mit einer Ablenkeinheit (hier z.B. umfassend einen beweglichen, hier: rotierbaren, Spiegel 6) ausgestattet ist und das Objekt P linien- bzw. zeilenweise abtastet.

In Fig. 3 ist als Konfigurationsmittel 6 eine Kamera vorgesehen und gezeichnet, welche die Auftreffpunkte der beleuchtenden Strahlung auf der Probe abbildet. Mit Hilfe der bekannten Strahlrichtung des Transceivers kann aus der Abbildung der Auftreffpunkte die Höhe der betrachteten Objektpunkte bestimmt werden. In Kombination mit einer Bestimmung der Auftreffpunkte des Strahlengangs auf dem Retroreflektor (beispielsweise mittels einer Kamera, die wie K6 in Fig. 2 angeordnet ist) oder einer ellipsometrischen Bestimmung der Strahlwinkel im Sensor selbst, kann zusätzlich eine Vermessung der Oberflächengeometrie der Probe erfolgen.

In den Figuren 2 und 3 (dies gilt auch für die anderen Figuren) nicht gezeichnet sind ggf. vorhandene Optiken zur Abbildung oder zur Formung des Strahlverlaufs (z.B. Linsen oder Spiegel zur Erzeugung einer speziellen Abtastung oder Abbildung).

Dabei können der Sender bzw. Laser 1 die folgenden Eigenschaften haben: Grundsätzlich können Retroreflex-Sensorsysteme im gesamten Bereich der elektromagnetischen Strahlung realisiert werden. Bedingung ist lediglich, dass es im jeweiligen Bereich geeignete Retroreflektoren, Detektoren und "optische" Elemente mit geeigneten Eigenschaften gibt (Strahlteilung, Polarisation, Refraktion bzw. Spiegelung). Naheliegende Ausführungsformen arbeiten im sichtbaren bzw. daran angrenzenden Spektralbereich. In bevorzugten Ausführungsformen kann beispielsweise eine Weißlichtquelle, ein oder mehrere Laser oder eine breitbandige IR- oder UV-Lichtquelle im Sender enthalten sein oder über eine Lichtleitfaser in den Sender eingekoppelt werden. Der Empfänger kann eine oder mehrere Fotodiode(n), einen oder mehrere Zeilensensoren, Photomultiplier, ... enthalten.

Geeignete Proben transmittieren oder reflektieren (spiegelnd, d.h. gemäß dem Reflexionsgesetz) einen ausreichen Anteil der auftreffenden Strahlung. Sehr gut geeignete Proben sind beispielsweise optische (auch beschichtete) Elemente, Metalle, vorzugsweise dünn beschichtete Materialien, Solarzellen, Nanoimprints.

Zur Verdeutlichung der vorteilhaften Wirkungen der einzelnen Konfigurationen bzw. Konfigurationsmittel K dieser Konfigurationen sind sie im Folgenden exemplarisch an Anwendungsfällen erläutert.

### IV.2. Die einzelnen, unabhängig voneinander oder miteinander realisierbaren Konfigurationen sowie Anwendungsfälle dafür

### IV.2.1. Konfiguration K1

Gemäß einer Ausführungsform der Erfindung können Mittel K1 vorgesehen sein, um den Retroreflektor 2 während der Messung zu bewegen. Dies kann mittels einer Drehbewegung oder einer Vibration des Reflektors erfolgen. Die Bewegung kann durch einen Aktor als Mittel K1 hervorgerufen werden. Bei dem Aktor kann es sich beispielsweise um einen frei laufenden oder optimal zur Lösung der Messaufgabe angesteuerten Motor oder Vibrator handeln.

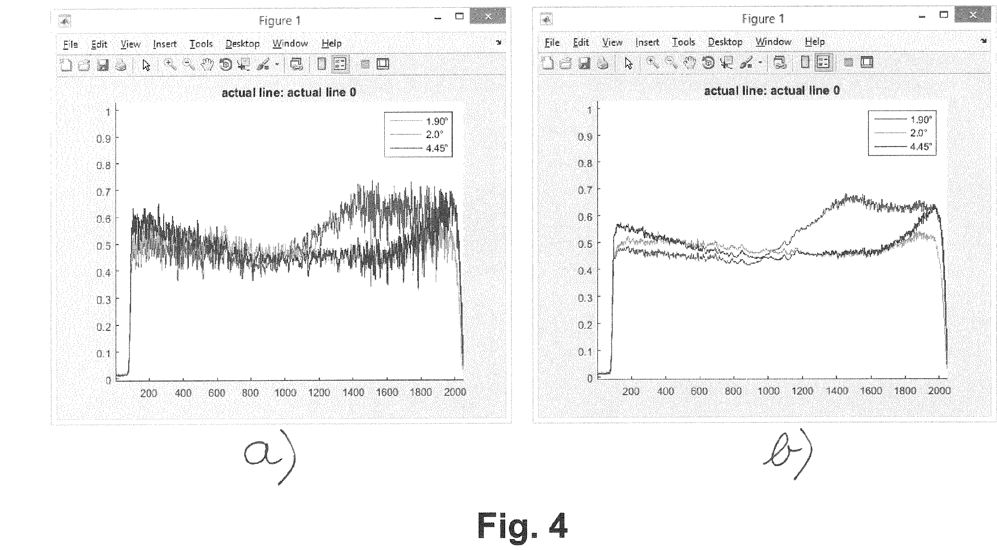

Die Bewegung kann beispielsweise kreisförmig oder vibrierend durchgeführt werden, um das Rauschen der Messsignale durch eine Mikrostruktur des Reflektors 2 zu minimieren. Fig. 4 zeigt eine erste vorteilhafte Wirkung dieser Konfiguration. Die in Fig. 4 gezeigten Messkurven wurden in einem Aufbau gemäß Fig. 3 aufgenommen. Als Mittel zur Ablenkung (6 in Fig. 3) war ein Polygonspiegel eingesetzt, so dass die Probe über die Zeit zeilenweise abgetastet wurde. Mit 3 einem Detektor (hier z. B. umfassend drei Einzeldetektoren) wurde der Intensitätsverlauf für drei Polarisationsrichtungen (90°,0°,45°) über die Zeit aufgenommen und mit dem Beginn der Abtastung der Probe so synchronisiert, dass die Messdaten als Bildsignale (Pixel = x-Achse der Fig.4) auswertbar sind. Fig. 4a zeigt die Signale einzelner Bildzeilen, die ohne Bewegung des Reflektors aufgenommen wurden. Demgegenüber zeigt Fig.4b. das Ergebnis einer Auswertung, bei der einzelne Bildzeilen mit bewegtem Reflektor aufgenommen und in einer Vorverarbeitungsstufe passend so gemittelt wurden, dass Fig. 4b den Verlauf der Mittelwerte der Intensitäten über die Bildzeile darstellt.

Wie Fig. 4 zeigt kann ein für den Zweck der Konfiguration K1 optimiertes Aufnahmeverfahren eine Mittelung der Messsignale enthalten, die sowohl an die Messaufgabe, als auch an die Bewegung des Reflektors angepasst ist.

Fig. 4 zeigt also die Verbesserung des Signal-Rausch-Verhältnisses durch Konfiguration K1 anhand des Signalvergleichs ohne Konfiguration K1, d.h. mit statischem Reflektor (links) gegenüber einem gemäß K1 bewegten Reflektor 2 mit dazu abgestimmter Mittelung der Signale (rechts, b).

In Ausführungsformen der Erfindung, in denen gemäß Konfiguration K2 (s. nachfolgend) ein diese Konfiguration K2 realisierender Reflektor 2 (der z.B. die Polarisation der einfallenden Strahlung in bekannter Abhängigkeit vom Auftreffort oder Einfallswinkel ändert) bzw. ein Reflektor 2 samt einem diese Konfiguration K2 realisierenden, reflektor-externen Element verwendet wird, kann die Bewegung auch gezielt so gesteuert werden, dass dadurch eine Modulation der detektierten Strahlung mit einem Signal erfolgt, aus dem in einer Auswerteeinheit des Systems (nicht gezeigt) der Einstrahlwinkel des Messsignals auf die Reflektoroberfläche oder die Geometrie des Prüflings P berechenbar ist. Dies kann beispielsweise mit einem Aktor, der eine Sollgröße bekommt, die den Reflektor beispielsweise in eine davon abhängige Position oder Winkellage bringt, realisiert werden.

### IV.2.2. Konfiguration K2

Gemäß einer Ausführungsform der Erfindung können optisch wirksame Mittel K2 zwischen Probe und Reflektor gebracht werden. Beispiele hierfür sind Verzögerungselemente, optische Rotatoren, Abschwächer. Diese können auch veränderbar sein (beispielsweise gezielt ansteuerbar oder dreh- oder kippbar), so dass sich ihre optische Wirkung verändern lässt und in den ermittelten Messsignalen zu einer Modulation mit einem gewünschten bzw. auswertbaren Signalanteil führt.

In einigen Ausführungsformen der Erfindung kann es sich bei K2 auch um eine Beschichtung des Retroreflektors 2 selbst handeln, beispielsweise eine Schicht, die als Viertelwellen-Verzögerer wirkt.

In weiteren Ausführungsformen der Erfindung kann es sich um einen gezielten Aufbau eines Retroreflektors 2 selbst durch entsprechend ausgerichtete Mikrostrukturen handeln.

Neben Retroreflektoren (nachfolgend z.T. abgekürzt auch als "Reflektoren" bezeichnet) bestehend aus Mikrokugeln können in weiteren Ausführungsformen Reflektoren bestehend aus Mikroprismen verwendet werden. Diese Mikroprismen bestehen meist aus drei verspiegelten Ebenen, die untereinander jeweils einen 90°-Winkel bilden. Die verspiegelten Ebenen können entweder dreieckig oder quadratisch sein. Neben der geringeren Strahldivergenz bzw. höheren Intensität haben diese Reflektoren polarisationsverändernde Eigenschaften - im Gegensatz zu Reflektoren mit Mikrokugeln. Bei geeigneter Wahl der Mikrostruktur bewirkt die Mehrfachreflexion an den Mikrospiegeln eine Polarisationsänderung des auftreffenden Lichts, die sowohl vom Einfallswinkel als auch vom Drehwinkel des Retroreflektors bzw. der Mikroelemente abhängig ist und mit einem mathematischen Modell bestimmt werden kann. Werden bei unterschiedlichen Drehwinkeln des Retroreflektors mehrere Aufnahmen gemacht, dann ist es möglich sowohl die Drehung der Probe bzgl. des Kamerakoordinatensystems als auch den Einfallswinkel direkt zu berechnen. Dies ist unabhängig von der untersuchten Probe, solange die Schichtstruktur aus isotropen Materialien besteht. Nach der Berechnung des Einfalls- und Drehwinkels für jeden Bildpunkt können die weiteren Modellparameter wie Brechungsindex und Schichtdicke mit herkömmlichen Verfahren der Ellipsometrie berechnet werden, da die Oberflächennormale bekannt ist.

### IV.2.2.1. Erstes Beispiel für die Konfiguration K2

Ein Beispiel für die Konfiguration K2 ist die Unterdrückung von Polarisationseffekten bei der Reflexion der Strahlen an der Probe P.

Die gemeinsame Wirkung von Konfiguration K2 kann mit dem Müllerformalismus beschrieben werden. In dieser Betrachtung wird die gemeinsame Wirkung von einem separaten, reflektorexternen Konfigurationsmittel K2 einerseits und dem Retroreflektor 2 andererseits durch eine resultierende Müllermatrix Mᵣₑₛ beschrieben als Mᵣₑₛ = M_{Rück} M_{Reflektor} M_{Hin}. Dabei ist M_{Hin} ist die Müllematrix für den optischen Weg der Strahlung 1-S von der Probe P durch das Element K2, M_{Reflektor} ist die Müllermatrix des Reflektors 2 und M_{Rück} ist die Müllermatrix für den Rückweg der Strahlung 1-E durch das optische Element K2 zur Probe P zurück.

Für die Unterdrückung von Polarisationseffekten bei der Reflexion der Strahlung an der Probe P wird das optische Element K2 so auf die Eigenschaften des Retroreflektors 2 abgestimmt, dass Mᵣₑₛ möglichst nahe an die für diesen Anwendungsfall optimale Müllermatrix ${M}_{res , optimal} = \left(\begin{matrix}1 & 0 & 0 & 0 \\ 0 & 0 & 0 & 0 \\ 0 & 0 & 0 & 0 \\ 0 & 0 & 0 & 0\end{matrix}\right)$ herankommt.

In diesem Optimalfall werden Polarisationseffekte bei der Reflexion an der Probe eliminiert oder zumindest minimiert. Damit ist diese Konfiguration beispielsweise ideal für die Erkennung dekorativer Defekte auf beschichteten oder lackierten Oberflächen geeignet. Dort sind die durch diese Defekte verursachten Einbrüche der Reflektanz ansonsten ggf. von Polarisationseffekten überlagert und können nicht zuverlässig von diesen unterschieden werden.

Als optisch wirksames Mittel für diesen Anwendungsfall kann es sich bei K2 um einen Depolarisator oder um eine Depolarisationsbeschichtung des eigentlichen Reflektors handeln.

Auch für Anwendungen, bei denen Strukturkanten des Prüflings P oder Grenzflächenverläufe im Prüfling ermittelt werden sollen, erhält man in dieser Konfiguration den Vorteil, dass Polarisationssignale, die ansonsten das Messsignal überlagern und verfälschen, eliminiert werden.

### IV.2.2.2. Weitere Beispiele für die Konfiguration K2

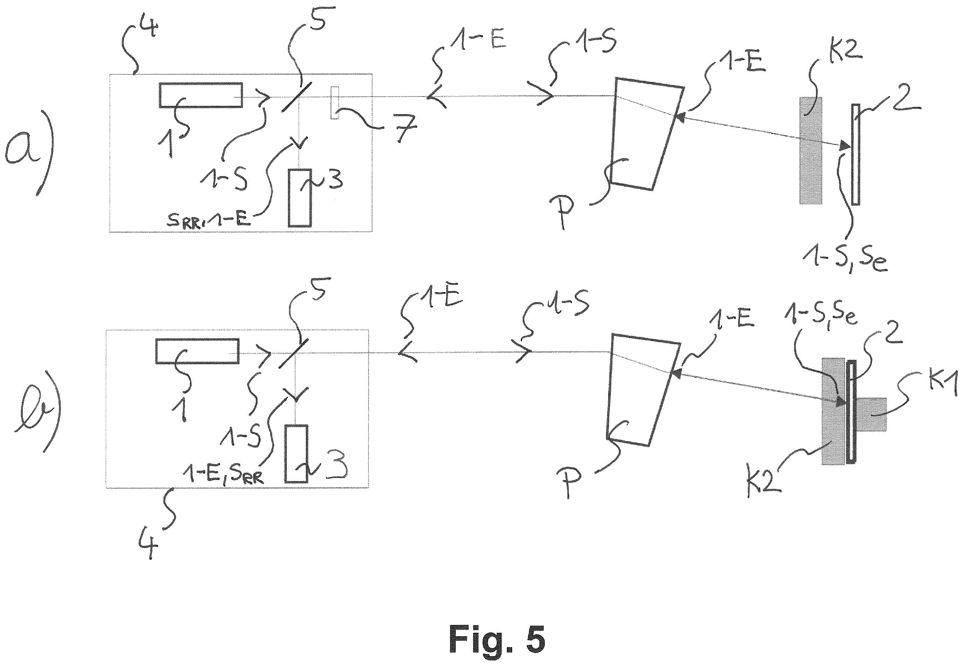

Ein weiteres Beispiel einer Anwendung dieser Konfiguration ist in Fig. 5 dargestellt. Fig. 5 zeigt alternative erfindungsgemäße Systeme, die grundsätzlich wie in Fig. 2 gezeigt aufgebaut sind, so dass nachfolgend nur die Unterschiede beschrieben werden. Erster Unterschied ist, dass es sich bei den in Fig. 5a und 5b gezeigten Beispielsystemen um Transmissionssysteme handelt.

Zudem sendet der Sender 1 in diesem Fall zirkular polarisiertes Licht aus. Der Empfänger 3 detektiert das entgegengesetzt zirkular polarisierte Licht. Bei dem erfindungsgemäßen Mittel K2 handelt es sich hier um ein Element in Form einer (beliebig zur optischen Achse gedrehte) Halbwellenlängenplatte oder Halbwellenlängenfolie. Die gemeinsame Detektionseinheit im Gehäuse 4 kann entweder aufgebaut sein, wie in Fig. 5b gezeigt (mit Strahlteiler 5 und getrennter Realisierung der Polarisation von Beleuchtung 1 und Detektor 3) oder wie in Fig. 5a gezeigt. Dort wird ein polarisierender Strahlteiler eingesetzt. Die von den Lichtquellen kommende Strahlung ist dann linear polarisiert und nach Durchgang durch das Viertelwellenlängen (λ/4)-Verzögerungselement 7 ist die Strahlung zirkular polarisiert. Der Empfängerstrahlengang gelangt durch das gleiche Element 7 auf den polarisierenden Strahlteiler 5, so dass Element 7 insgesamt (über den gesamten Strahlengang) zu einer Verzögerung von einer halben Wellenlänge führt (λ/2).

In beiden Aufbauvarianten detektiert der Sensor 3 ein Signal, das proportional zu cos²(Δ) ist, mit der gesuchten Verzögerung Δ in der Probe.

In weiteren Ausführungsformen der Erfindung ist das Mittel bzw. Element K2 modulierbar oder verstellbar ausgeführt und erlaubt zusätzliche oder bessere Messungen zur Charakterisierung der Probe. In anderen Ausführungsformen der Erfindung ist K2 als optisches Element fest mit einem drehbaren Reflektor 2 gemäß Konfiguration K1 verbunden, beispielsweise als Beschichtung des Reflektors 2 oder als mit diesem rotierendes, separates optisches Element.

Als Beispiel für eine Anwendung mit einem rotierenden optischen Element K2 wird (ohne Beschränkung auf diese Ausführungsform) die Retroreflex-Transmissionsanordnung gem. Fig. 5b betrachtet. Sie besteht (oder enthält die nachfolgenden Elemente) aus dem Sender 1, der zirkular polarisiertes Licht emittiert, dem Empfänger 3, der einkanalig die Intensität der auf ihn auftreffenden zirkular polarisierten Strahlung detektiert und einer erfindungsgemäß mit dem polarisationserhaltenden Retroreflektor 2 rotierenden Viertelwellenlängenplatte oder -folie K2. Wenn ein Retroreflektor 2 ohne Strahlversatz eingesetzt wird, detektiert der Empfänger 3 selbst bei Objekten P mit starken Brechkräften ein Intensitätssignal I, das die folgende Charakteristik aufweist: $I = 0.5 Cos {\left[2\left(α-θ\right)\right]}^{2} Sin {\left[Δ\right]}^{2}$ mit dem Winkel α der Richtung der (ggf. spannungsinduzierten) Verzögerung in der Probe, dem Drehwinkel θ der Viertelwellenlängenplatte oder -folie und der Verzögerung bzw. spannungsinduzierten Phasenverschiebung Δ auf den Strahlengängen durch die Probe P.

Für dieses Ausführungsbeispiel kann die Verzögerungsplatte K2 allein oder gemeinsam mit dem Reflektor 2 rotieren. In anderen Ausführungsformen der Erfindung wird ein modulierbares Verzögerungselement als K2 eingesetzt. Der Winkel θ wird in diesen Fällen durch Modulation verändert.

Fig. 5 zeigt also Beispiele für Systeme bzw. Sensoren mit optischen Elementen bzw. Konfigurationsmitteln K2 zwischen Probe P und Reflektor 2. In Figur 5a ist das optische Element K2 allein angebracht, in Figur 5b ist das Element K2 mit dem Reflektor 2 fest verbunden und wird (mittels K1) zusammen mit dem Reflektor bewegt.

In den genannten Beispielen wird ein polarisationserhaltender Retroreflektor verwendet. Die zirkulare Polarisation des Senderstrahlengangs wird entweder durch Verwendung einer zirkular polarisierten Strahlungsquelle 1 und eines nicht polarisierenden Strahlteilers 5 erreicht (s. Fig. 5b) oder durch Verwendung eines polarisierenden Strahlteilers (5 in Fig. 5a) gemeinsam mit einem Verzögerungselement (7 in Fig. 5a).

### IV.2.3. Konfiguration K3

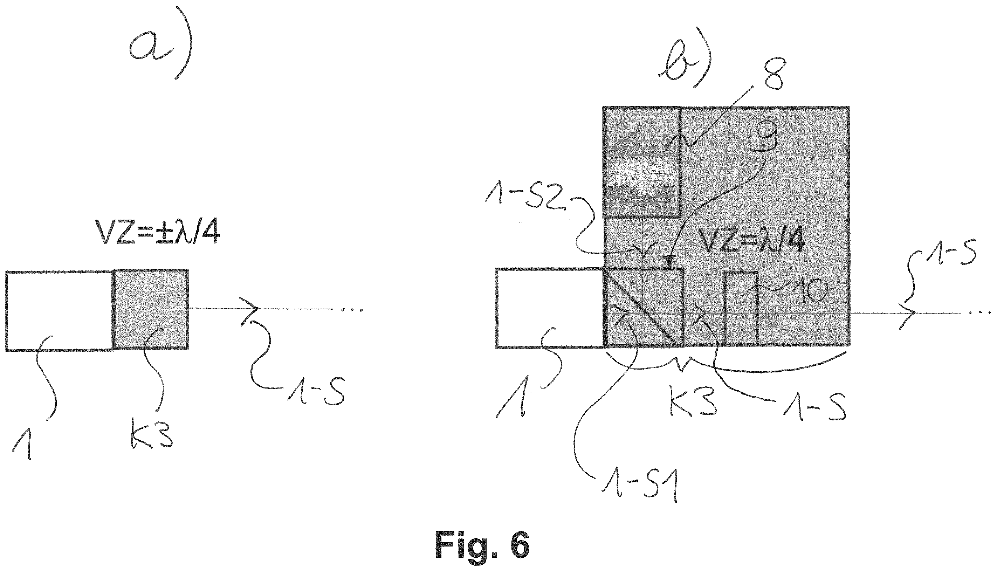

Durch eine Modulation des Polarisationszustands der Beleuchtung 1 mit mindestens zwei unterschiedlichen Zuständen durch ein Modulationsmittel bzw. -element K3 im Senderstrahlengang 1-S wird es möglich, zusätzlich den Neigungswinkel der Probenoberfläche gegen die optische Achse zu bestimmen. Bei erfindungsgemäßen Systemen bzw. Sensoren mit Abtastung der Probenoberfläche (z.B. Laserscanner) kann damit die Bestimmung des Neigungswinkels für jeden Bildpunkt bzw. jedes Pixel getrennt erfolgen. Ein erfindungsgemäße derartige Modulation ist die Modulation der Beleuchtung 1 so, dass abwechselnd links- und rechtszirkular polarisierte Strahlung abgegeben wird. Dazu wird ein elektronisch einstellbares Verzögerungselement K3 im Senderstrahlengang 1-S angebracht, z.B. unmittelbar strahlausgangsseitig des Senders 1 (vgl. Fig. 6a).

Alternativ dazu (vgl. Fig. 6b) kann eine weitere Lichtquelle 8 mit derselben Emissionswellenlänge λ wie der Sender 1 (oder mit einer vom λ des Senders 1 in der Regel lediglich geringfügig abweichenden Emissionswellenlänge) in dem zweiten Lichtweg 1-S2 eines eingebrachten polarisierenden Strahlteilers 9 angeordnet werden. (Die Strahlung der Quelle 8 bzw. des Lichtwegs wird über den Strahlteiler 9 in den Lichtweg 1-S1 des Senders 1 eingekoppelt zur Gesamtstrahlung 1-S strahlungsausgangsseitig des Teilers 9.) Im Senderstrahlengang 1-S hinter dem Teiler 9, also zwischen dem polarisierenden Strahlteiler 9 und dem Objekt P (hier nicht sichtbar) kann zusätzlich ein Viertelwellenlängen- bzw. A/4-Verzögerungselement 10 angeordnet sein.

Die Modulation entsteht bei Fig. 6b, indem die Lichtquellen 1 und 8 abwechsabwechselnd eingeschaltet werden. Beispielsweise kann im Rahmen der vorliegenden Erfindung als Transceiver bzw. als kombinierte Sende- und Empfangseinheit (d.h. als Sender 1 samt Empfänger 3 im gemeinsamen Gehäuse 4) ein Laserscanner gemäß der STT1 eingesetzt werden( z.B. gemäß des dort in den Figuren 2, 3 oder 7 gezeigten Aufbaus. Kann der Empfänger 1 des Transceivers 1, 2, 4 zumindest die Komponenten U und V der einfallenden Strahlung bestimmen, die einen Stokesvektors {S,U,V,W} aufweist, so kann aus diesen Messwerten der linearen Polarisationskomponenten des Stokesvektors den Winkel ϕ jedes Mess- bzw. Bildpunktes der Probe P gegen die Vorzugsrichtung des Detektors berechnet werden. Bei der Vermessung isotroper Proben ist der Winkel ϕ die Drehlage der Oberflächennormale der Probe gegen die Vorzugsrichtung des Detektors (Richtungen der U-Polarisationen). Die Werte U[W+] und V[W+] des Detektors werden bei positiver zirkular polarisierter Beleuchtung bestimmt. Die Werte U[W-] und V[W-] werden bei der entgegengesetzt zirkular polarisierten Beleuchtung bestimmt. In diesen Bezeichnungen ist die Bestimmungsgleichung für den Winkel ϕ gegeben durch: $tan \left(2ϕ\right) = \frac{V \left[W+\right] + V \left[W-\right]}{U \left[W+\right] + U \left[W-\right]} .$

Damit können ellipsometrische Messungen mit der Anordnung korrigiert und erfindungsgemäß eine Drehlage des Objekts bzw. jedes Objektpunktes zum Sensorkoordinatensystem bestimmt.

Sofern der Beleuchtungsstrahlengang 1-S in der Wellenlänge λ moduliert wird, kann das System die optischen Eigenschaften an mehreren spektralen Messpunkten aufnehmen und so - in nach dem Stand der Technik für Einzelpunkt-Messgeräte an und für sich bekannter Weise - mehrere Stützstellen bei der modellgestützten Vermessung von Proben P gewinnen. Bei ein- oder zweidimensional arbeitenden (bildgebenden) Sensoren bzw. Systemen kann ebenfalls eine Wellenlängenmodulation durchgeführt werden. Die Modulation erfolgt in diesem Fall synchron zu der Gewinnung von Teilbildern - beispielsweise zeilenweise, bildweise oder in einem festen Pixelraster.

Die Wellenlängenmodulation lässt sich mit der erfindungsgemäßen Modulation des Polarisationszustands der Beleuchtung 1 kombinieren. In einer vorteilhaften Ausführung dieser Kombination emittieren die beiden Lichtquellen 1 und 8 Fig. 6b (jeweils als Laser) unterschiedliche Wellenlängen, mit einem spektralen Abstand, der jeweils klein im Verhältnis zu jeder der beiden Wellenlängen der Laser ist.

Fig. 6 zeigt also zwei Ausführungsbeispiele einer zirkular polarisierten Beleuchtungsmodulation (gemäß K3) durch einen polarisierten Sender 1 und ein modulierbares bzw. drehbares Verzögerungselement K3 (Fig. 6a) oder äquivalent dazu durch ein Mittel K3 umfassend eine zusätzliche Strahlquelle 8, einen polarisierenden Strahlteilerwürfel 9 und ein festes Verzögerungselement 10 (Fig. 6b). In der in Fig. 6b gezeigten Ausführung erfolgt die Modulation durch Um- bzw. Ein- und Ausschalten der beiden Lichtquellen 1 und 8.

### IV.2.4. Konfiguration K4

Durch die Messung in Retroreflexion gehen die optischen Eigenschaften des Messobjekts P quadratisch in die Messsignale ein (multiplikativ auf dem Hinweg 1-S über/durch die Probe P zum Reflektor 2 und auf dem Rückweg 1-E vom Reflektor 2 über/durch die Probe P). Während die ellipsometrischen Kenngrößen Δ und ψ als Argumente von Winkelfunktionen in die Messgrößen bei Systemen mit einfacher Reflexion eingehen, gehen sie bei vergleichbaren Retroreflex-Messsystemen mit einem Vorfaktor 2 ein. Dementsprechend weisen die Retroreflexsysteme einen nur halb so großen Bereich auf, in dem diese Größen eindeutig bestimmt werden können. Ferner kann je nach Ausführungsform des Systems die Messgenauigkeit für die Bestimmung der Größen Δ und ψ mit deren Absolutwert stark variieren.

Zur Lösung dieser Probleme in Konfiguration K4 wird ein festes, einstellbares oder modulierbares optisches Mittel bzw. Element (Verzögerungselement und/oder dichroitisches Element) angeordnet, um die eindeutigen Bereiche der Vermessung optimal an die zu messenden Wertebereiche der jeweils interessierenden Proben anzupassen.

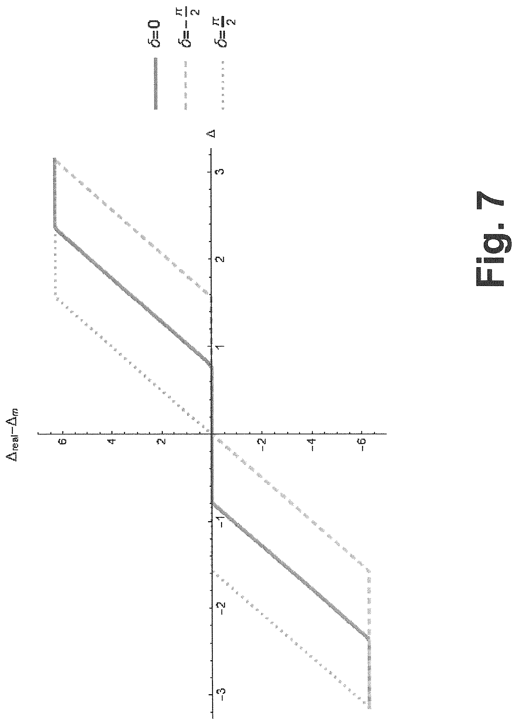

Bringt man entsprechend Konfiguration K4 beispielsweise ein zusätzliches Verzögerungselement direkt vor den Empfänger 3 in den Empfangsstrahlengang 1-E (also im Gehäuse 4 in 1-E strahlausgangsseitig des Teilers 5, also zwischen den Teiler 5 und den Empfänger 3), so kann der eindeutige Messbereich des Systems an den Bereich der zu vermessenden Proben angepasst werden. Fig. 7 zeigt dies für die Bestimmung der Phasenverschiebung Δ mit einem Retroreflex-Ellipsometer für ein gemäß Konfiguration 4 bzw. als K4 eingebrachtes Verzögerungselement, das im gezeigten Beispiel auf eine Phasenverschiebung von δ = -π/2, δ = 0 oder δ = +π/2 eingestellt ist.

Je nach Anwendungsfall kann das Verzögerungselement fest eingestellt im Strahlengang eingebracht, als variables Element (z.B. elektrisch ansteuerbar) oder in den Strahlengang einschwenkbar sein.

Weitere Ausführungsformen der Konfiguration K4 können die Größen Δ und ψ modulieren und mit einem entsprechenden Auswerteverfahren genauere oder ergänzende Messwerte ermitteln.

Fig. 7 zeigt also die eindeutigen Bereiche (Δᵣₑₐₗ-Δₘ=0) der Bestimmung von Δ für unterschiedliche Phasenverschiebungen δ eines zusätzlichen Verzögerungselements (als Mittel K4) vor dem Empfänger 3.

### IV.2.5. Konfiguration K5

Zusätzliche Objektinformationen über P können erhalten werden, wenn das System bzw. dessen Detektor 3 alle vier Stokesparameter gleichzeitig bestimmt. Dies kann beispielsweise durch eine Erweiterung des Detektors eines Retroreflex-Sensors zu einem "Division of Amplitude Photopolarimeter" , erfolgen (z. B. gemäß [STT5]). Alternativ dazu kann der Detektor eines Retroreflex-Sensors durch einen entsprechenden Detektor ersetzt werden.

Wird beispielsweise der Detektor eines Retroreflexsensors nach STT1 entsprechend erweitert und im Rahmen der vorliegenden Erfindung eingesetzt, so kann anhand der Messwerte selbst überprüft werden, ob das Objekt P oder jeder Bildpunkt des Objekts P depolarisierend ist oder nicht. Sofern keine Depolaristion festgestellt wird, kann eine weitergehende ellipsometrische Untersuchung der Anisotropie der Probe erfolgen.

Bei der vorliegenden Erfindung können auch zusätzliche Lichtquellen in den optischen Pfad eingebracht werden. Diese Lichtquellen können zusätzlich oder alternativ zu der (den) Lichtquelle(n) im Senderteil 1 angeordnet werden. Bei entsprechender Ausgestaltung der Anordnung erlaubt dies die Ermittlung der kompletten Müllermatrix jedes untersuchten Objektpunktes in einer Retroreflex-Anordnung.

### IV.2.6. Konfiguration K6

Für genaue ellipsometrische Messungen - beispielsweise der Dicke von Beschichtungen oder Lackierungen - ist die Kenntnis des Einfallswinkels der Strahlung auf die Probe P notwendig - sowohl in der Reflexionsebene, als auch gegen die Strahlachse bzw. Vorzugsrichtung des Detektors 3.

In vielen Fällen ist diese Information vorhanden bzw. prinzipiell zugänglich (beispielsweise bei planaren Objekten P, die präzise durch das Messfeld geführt werden oder in CAD-Daten). Sofern die Objektgeometrie aus CAD-Daten abgeleitet wird (eine der Möglichkeiten für ein Konfigurationsmittel K6), muss die Auswerteeinheit des Systems die CAD-Daten mit der Bewegung des Objekts P durch das Messfeld abgleichen und aus Daten der Bewegung des Objekts durch das Messfeld (Bewegungsdaten) und den CAD-Daten für jeden Messpunkt die zugehörigen Winkelinformationen bereitstellen.

Der einfachste Fall für einen solchen Abgleich ist die Bewegung des Objekts mit konstanter Geschwindigkeit durch das Messfeld. Unter dieser Vorbedingung muss nur ein Triggersignal ausgelöst werden, wenn die Bewegung des Objekts durch das Messfeld beginnt und die Geschwindigkeit der Bewegung muss bekannt sein. Dann können die CAD-Daten direkt mit den Bilddaten abgeglichen werden. Ansonsten müssen Signale (Bewegungsdaten z.B. aus einer Motorsteuerung für die Bewegung des Objekts P oder zusätzlichen Weggeber-Signalen, etc.) bereitgestellt werden, die diesen Abgleich erst möglich machen.

In Fällen, in denen weder aus den Messwerten selbst, noch aus externen Datenquellen die Strahlwinkel ableitbar sind, müssen für eine erweiterte Charakterisierung der optischen Eigenschaften des Objekts P (bzw. von Bildpunkten desselben) die Strahlwinkel zusätzlich vermessen werden. In einfacher Weise kann dies durch eine Abbildung des Messpunktes auf dem Objekt P (vgl. Kamera K6 in Fig. 3) und/oder eine Abbildung des Auftreffpunktes der Strahlung 1-S bzw. Sₑ auf dem Reflektor 2 erfolgen (vgl. Kamera K6 in Fig. 2). Alternativ dazu kann auch ein zusätzliches Messsystem angeordnet werden, das mit Verfahren nach dem Stand der Technik (z.B. mechanische Abtastung, Triangulation, Deflektometrie etc.) die Neigungen der Oberfläche von P (relativ zur Führung oder Auflage) bestimmt.

### IV.2.7 Weitere mit der Erfindung kombinierbare Konfigurationsmittel

Für erweiterte oder verbesserte Auswertungen der Messwerte ist es vorteilhaft, zusätzlich Konfigurationsmittel vorzusehen, mit deren Hilfe die gemessenen Intensitätswerte bereits auf der untersten Stufe der Auswertung normiert werden können. Diese können in dem gemeinsamen Gehäuse 4 integriert sein oder im Bereich außerhalb desselben angebracht sein.

Beispielhafte Ausführungen dafür sind:
- Für Systeme mit Laserscannern (z. B. gemäß STT1) kann im Gehäuse 4 ein weiterer Retroreflektor (oder eine Kombination eines weiteren Retroreflektors mit optischen Mitteln wie Neutralfilter oder polarisationsverändernden optische Bauteilen) so angeordnet sein, dass ein Teil der Scanlinie direkt in den Empfänger 3 zurückreflektiert wird. Dies ist immer dann möglich, wenn nicht die komplette Scanlinie zur Erfassung der Probe P benötigt wird. In diesem Fall können Schwankungen der Beleuchtung 1 oder der Empfindlichkeit vom Detektor 3 (bzw. von Detektorteilen desselben) durch die Normierung ausgeglichen werden.
- In erfindungsgemäßen Transmissions-Systemen mit Laserscannern (z. B. gemäß STT1) kann ein Bereich des Retroreflektors 2 zur Normierung verwendet werden, der durch das Objekt P nicht verdeckt wird. Mit dieser Normierung können zusätzliche Schwankungen der gemessenen Intensitäten kompensiert werden, die außerhalb des Gehäuses 4 entstehen (z.B. ein Beschlag des Retroreflektors 2).
- In erfindungsgemäßen Reflexionssystemen kann/können für entsprechende Normierungen mit gleichen Vorteilen (ggf. zusätzlich) ein oder mehrere Referenzobjekt(e) neben der Probe P so angeordnet sein, dass ein Teil der Beleuchtung 1 an diesem/n Referenzobjekt(en) reflektiert wird und die reflektierten Strahlen den Retroreflektor 2 treffen.

### IV.3 Beispielhafte Kombinationen von Konfigurationen

### IV.3.1. Erstes Kombinationsbeispiel

Der einheitliche Gesamtgedanke der Erfindung wird nun am Beispiel eines universellen Systems zur verbesserten Klassifikation und Charakterisierung von Objekten P bzw. Punkten der Objektoberfläche dargestellt. Dabei wird verdeutlicht, dass die Hinzunahme jeder einzelnen beschriebenen Konfiguration (also z.B. mehrerer oder aller der Konfigurationsmittel K1 bis K6) eine Verbesserung erbringt, die für definierte Messaufgaben bereits eine ausreichende oder sogar die optimale Lösung darstellt. Ein erfindungsgemäßes Beispiel erfordert die Hinzunahme des Konfigurationsmittels K3.

Das Kombinationsbeispiel basiert auf einem bildgebenden Retroreflex-Laserscanner gemäß des Grundaufbaus in STT1, der durch entsprechende (Zusatz-)Konfigurationsmittel erfindungsgemäß erweitert ist zu einem umfassenden System zur Klassifikation von Proben hinsichtlich dekorativer Defekte, Materialdefekte, der Materialart, der Beschichtung und von Beschichtungsfehlern. Mit diesem System können alle ellipsometrischen Parameter - auch an nicht ebenen Oberflächen und auch in vielen Fertigungsprozessen - ermittelt werden. Oft waren diese Parameter bisher nur im Labor an flachen Bereichen von Proben mittels Ellipsometrie bestimmbar.

Der Grundaufbau aus STT1 nutzt die Retroreflexion der an der Probe gespiegelten Strahlung: Die Strahlen treffen nach der Spiegelung auf der Objektoberfläche von P auf einen Retroreflektor 2. Bei Reflektoren 2 ohne Strahlversatz werden die Strahlen auf genau dem gleichen optischen Weg zurück in die kombinierte Sende- und Empfangseinheit 1, 3 und 4 reflektiert. Daher erhält man mit diesem Systemkonzept in einem weiten Winkelbereich auswertbare Signale der untersuchten Proben P. (Im Gegensatz dazu führen bei herkömmlichen Ellipsometern aus dem Stand der Technik bereits kleine Winkelabweichungen in der Größenordnung 1° bei Komponenten und Probe in der Einfallsebene dazu, dass kein auswertbares Messsignal detektierbar ist.) Mit dem Grundaufbau aus STT1 können dekorative Fehler der Proben als lokale Einbrüche der Reflektanz erkannt werden.

Sofern ein solches System erfindungsgemäß mit der Konfiguration 1 um einen bewegten Reflektor 2 erweitert wird, kann das Signal-Rausch-Verhältnis verbessert werden. Damit wird die Erkennung feinerer oder schwächerer lokaler Oberflächenstörungen entsprechend verbessert.

Sofern der Detektor 3 eines solchen System erfindungsgemäß entsprechend Konfiguration K5 so erweitert (es liegt also die Kombination K1 und K5 vor), dass auch der Polarisationsgrad der Strahlung detektiert wird, so kann für jeden Bildpunkt bzw. abgebildeten Punkt der Probe bereits eine Grobklassifikation durchgeführt werden nach den Kriterien:
- Depolarisierend mit gleichzeitiger Bestimmung des (De-)Polarisationsgrads.
- Das Objekt P (bzw. der Objektpunkt) weist eine rein zirkular anisotrope Müllermatrix auf.
- Das Objekt P (bzw. der Objektpunkt) zeigt keine Phasenverschiebung.
- Die Müllermatrix des Objekts P bzw. Objektpunkts zeigt lineare oder gemischt lineare und zirkulare Anisotropie.

Für Objekte ohne Phasenverschiebung kann zusätzlich der Drehwinkel zur optischen Achse des Sensors bestimmt werden. Ferner können für diese Objekte die Reflektanz R (in Reflexionsanordnungen) oder der Transmissionskoeffizient T (in Transmissionsanordnungen) und der ellipsometrische Parameter ψ aus den Messwerten berechnet werden. In vielen Fällen können daraus der Brechungsindex und der Extinktionskoeffizient ermittelt werden. Sofern nur diese Größen für diese Objekte zu ermitteln sind, ist bereits an dieser Stelle die optimale Lösung der Aufgabe erreicht.

Eine weitere Charakterisierung der Proben(-messpunkte) ist mit der Kombination K1 mit K3 (erfindungsgemäß) und K5 möglich. Wird die Probe P dementsprechend abwechselnd mit links- und rechtszirkular polarisiertem Licht beleuchtet, so kann - unabhängig von der Objektart - für jedes Paar von Bildpunkten der Drehwinkel einer Probenanomalie zum Sensorkoordinatensystem (also dem Empfängerkoordinatensystem) bestimmt werden. Aus dieser Information und den weiteren Messwerten kann zudem eindeutig bestimmt werden, ob die Müllermatrix des zugehörigen Punktes der Probe rein lineare Anisotropie aufweist. Für jeden Objektpunkt mit einer Müllermatrix mit rein linearer Anisotropie können zudem die ellipsometrischen Größen R bzw. T, Δ und ψ berechnet werden. Anomalien wie lokale Beschichtungsfehler oder Materialfehler können so als lokale Störungen erkannt werden, selbst wenn sie ggf. dem menschlichen Auge verborgen sind. Wird erfindungsgemäß gemäß K3 die Modulation durch Umschaltung zweier Lichtquellen 1 und 8 realisiert, die spektral in einem geringen Abstand emittieren, kann zudem oft für jeden Bildpunkt eines Substrats P der komplexe Brechungsindex des zugehörigen Punktes der Oberfläche bestimmt werden.

Zur Verbesserung und/oder Anpassung der Messgenauigkeit bzw. des eindeutigen Bereichs für die Auswertung kann zudem gemäß Konfiguration K4 ein optisches Element direkt vor dem Sensor angeordnet werden (es liegt dann die Kombination K1 mit K3, K4 und K5 vor).

Eine weitere Verbesserung der Genauigkeit des Systems ist ferner möglich, wenn präzisere Werte des Drehwinkels der Probe und/oder des Einfallswinkels gemäß Konfiguration K6 aus externen Datenquellen genutzt werden (es liegt dann die Kombination K1 mit K3, K4, K5 und K6 vor).

In einer anderen Ausführung eines solchen Systems kann eine spektral breitbandige Lichtquelle eingesetzt werden, in Kombination mit einem diffraktiven optischen Element vor dem Empfängerstrahlengang (gemäß Konfiguration K4). In diesem Fall ist es vorteilhaft die Modulation der Beleuchtung mit einem modulierbaren Verzögerungselement durchzuführen (gemäß Konfiguration K3) und Zeilensensoren als Detektoren im Empfänger einzusetzen. In dieser Ausführung erhält man zu jedem Zeitpunkt der Abtastung der Oberfläche den spektralen Verlauf der ellipsometrischen Kenngrößen bei einer Polarisation. Durch mindestens zweifache Abtastung des Messpunktes bei unterschiedlich polarisierter Beleuchtung erhält man Paare von Spektren, aus denen sich mit den Methoden der spektroskopischen Ellipsometrie die Eigenschaften des Objektpunkts sowie dessen Winkellage ableiten lassen.

Die Konfigurationskombinationen wurden hier exemplarisch ausgehend vom Grundaufbau aus STT1 (also als erfindungsgemäße Erweiterungen von Systemen nach STT1) beschrieben, also für Systeme, die in Reflexion arbeitet. Für Systeme, die in Transmission arbeiten, gelten die Ausführungen sinngemäß. Bei Bedarf können einzelne Konfigurationen auch weggelassen werden.

### IV.3.2. Zweites Kombinationsbeispiel

Für dieses Beispiel wird ein Retroreflexsensor wie folgt erweitert (z.B. erfindungsgemäßes System gemäß Fig. 2, wobei von den Konfigurationen zumindest K2 und K3 vorgesehen sind):
- Das optisch wirksame Mittel K2 (zwischen Objekt P und einem polarisationserhaltenden Retroreflektor 2) ist ein mit der Winkelgeschwindigkeit ω rotierendes Viertelwellen-Verzögerungselement.
- Gemäß K3 ist eine abwechselnd links- und rechtszirkulare Beleuchtung gewählt, die im Vergleich zur Winkelgeschwindigkeit ω schnell moduliert wird.

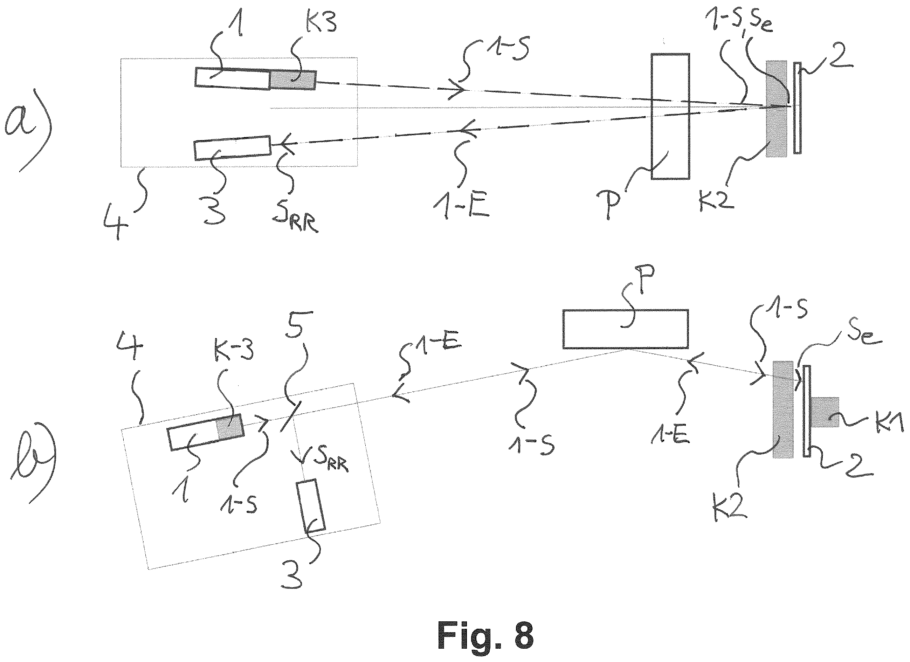

Fig. 8a zeigt eine solche Ausführungsform der Erfindung in Transmissionsanordnung mit einer Lichtquelle, die neben dem Detektor angeordnet ist und die ellipsometrischen Kenngrößen in Transmission ermittelt. Sender S und Empfänger E können dabei als Punkt-, Linien- oder Flächen- Beleuchtung und Detektor realisiert sein.

In einer besonders vorteilhaften Ausgestaltung dieses erfinderischen Gedankens ist das Verzögerungselement K2 fest mit dem Retroreflektor 2 gekoppelt (beispielsweise als Beschichtung oder darüber angebrachter Folie) und rotiert zusätzlich gemäß K1 gemeinsam mit diesem. In diesem Fall kann gleichzeitig eine zusätzliche Verbesserung des Signal-Rausch-Verhältnisses erreicht werden.

Fig. 8b zeigt eine solche Ausführung zur Bestimmung der Kenngrößen in Reflexion mit einem drehbaren Retroreflektor 2 gemäß K1. In vorteilhafter Ausführung ist das optische Element K2 direkt mit dem Reflektor 2 verbunden.

Fig. 8 zeigt somit zwei Ausführungsformen erfindungsgemäßer Retroreflex-Ellipsometer zur Bestimmung der ellipsometrischen Parameter unabhängig von der Probenjustierung.

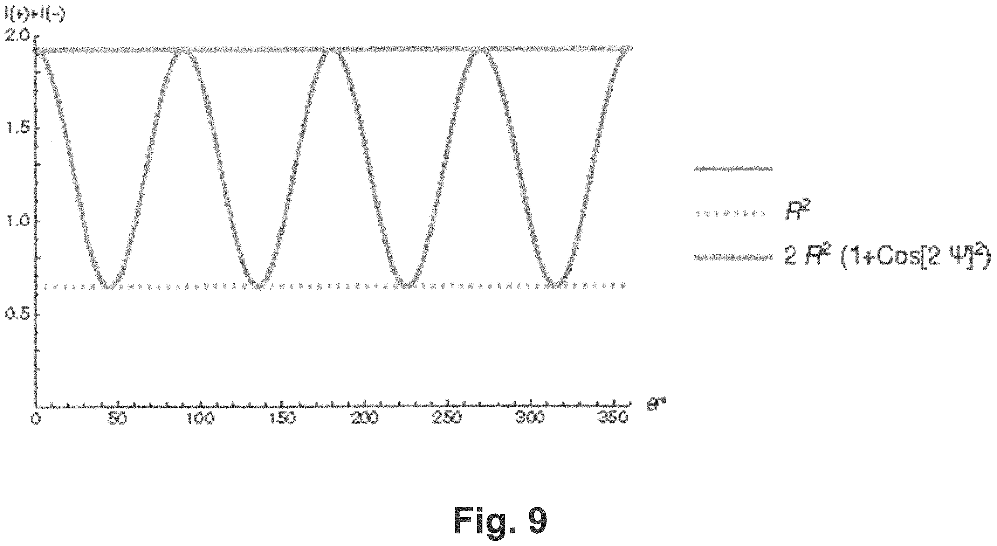

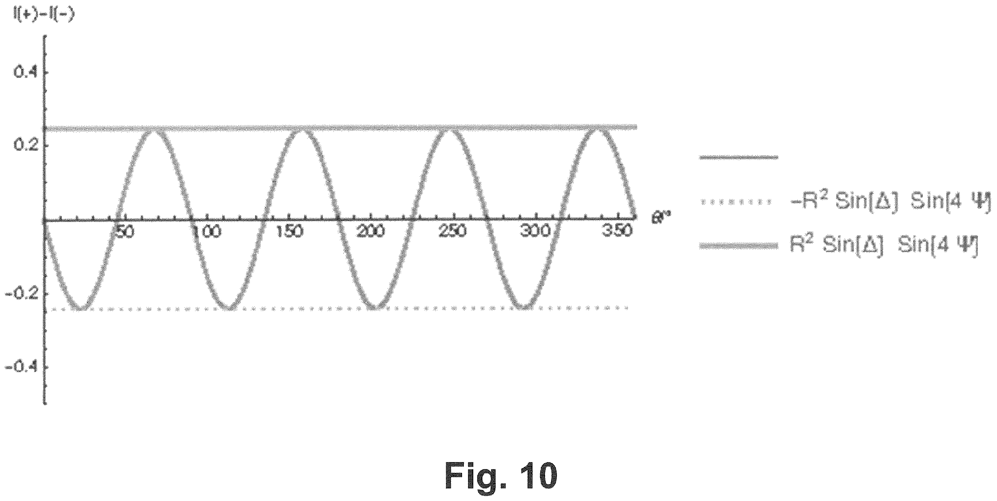

Figuren 9 und 10 zeigen (zur Fig. 8) das Messsignal, das mit einer Ausführungsform mit einkanaligem Intensitätsdetektor während einer Drehung des Verzögerungselements K2 entsteht. Gezeigt sind die Summe (Fig. 9) und die Differenz (Fig. 10) der Intensitätssignale bei abwechselnder links- und rechtszirkularer Beleuchtung. Wie dies verdeutlicht, können aus den Signalverläufen in einfacher Weise die Kenngrößen R bzw. T, Δ und ψ abgeleitet werden. Aus der Winkellage der Maxima bzw. Minima folgt ferner direkt der Drehwinkel der Probe P (gegen die Vorzugsrichtung des Verzögerungselements K2).

Durch zusätzliche Konfiguration eines diffraktiven optischen Elements vor dem Empfängerstrahlengang (gemäß Konfiguration K4) in Kombination mit einer linienförmigen Weißlichtquelle als Sender und einem Matrixdetektor als Empfänger kann ein spektroskopisches Ellipsometer realisiert werden. Dieses kann zur Vermessung von Objekten eingesetzt werden, die mit spektroskopischen Ellipsometern nach dem Stand der Technik nicht vermessbar sind.

## Patentansprüche

1. Retroreflektorbasiertes Sensorsystem zum optischen Charakterisieren einer Probe (P) mit
einem Sender (1) zum Bestrahlen der im Senderstrahlengang (1-S) positionierten Probe (P),
einem Retroreflektor (2), der im Senderstrahlengang (1-S) hinter der Probe (P) so positioniert ist, dass er im Senderstrahlengang (1-S) von der Probe (P) herkommend auf ihn einfallende Strahlung (Sₑ) im Empfangsstrahlengang (1-E) auf die Probe (P) zurückreflektiert,
wobei der Sender (1), die Probe (P) und der Retroreflektor (2) so positioniert sind, dass im Empfangsstrahlengang (1-E) vom Retroreflektor (2) zurückreflektierte Strahlung erneut auf die Probe (P) einfällt und von letzterer (P) in Richtung zum Sender (1) hin zurückgestrahlt wird, und einem Empfänger (3), der im Empfangsstrahlengang (1-E) so positioniert ist, dass er vom Retroreflektor (2) zurückreflektierte, erneut auf die Probe (P) eingefallene und von letzterer (P) in Richtung zum Sender (1) hin zurückgestrahlte Strahlung (S_{RR}) detektiert,
wobei aus der vom Empfänger (3) detektierten Strahlung (S_{RR}) Messwerte gewinn- und auswertbar sind zum optischen Charakterisieren der Probe (P),
**dadurch gekennzeichnet, dass** zumindest ein Konfigurationsmittel (K1 bis K7) vorgesehen ist,
mittels dessen eine verbesserte Gewinnung und/oder Auswertung der Messwerte ermöglicht ist, zum verbesserten optischen Charakterisieren der Probe (P),
wobei
- eines (K3) der Konfigurationsmittel (K1 bis K7) ausgebildet ist, einen Polarisationszustand der Beleuchtung im Senderstrahlengang (1-S) zwischen positiv zirkular polarisierten und negativ zirkular polarisierten Zuständen zu modulieren oder umzuschalten
- das retroreflektorbasierte Sensorsystem zur Korrektur ellipsometrischer Messungen ausgebildet ist, aus den bei positiver und bei negativer zirkular polarisierter Beleuchtung vom Empfänger bestimmten Werten für eine isotrope Probe eine Drehlage einer Oberflächennormalen der Probe (P) gegen eine Vorzugsrichtung des Empfängers (3) zu bestimmen.

2. Retroreflektorbasiertes Sensorsystem nach dem vorhergehenden Anspruch,
***dadurch gekennzeichnet, dass***
eines (K1) oder mehrere der Konfigurationsmittel (K1 bis K7) ausgebildet und/oder positioniert ist/sind, um den Sender (1), die Probe (P), den Retroreflektor (2) und/oder den Empfänger (3) zu bewegen, insbesondere mechanisch zu bewegen, während die Strahlung (S_{RR}) durch den Empfänger (3) detektiert wird.

3. Retroreflektorbasiertes Sensorsystem nach einem der vorhergehenden Ansprüche,
***dadurch gekennzeichnet, dass***
eines oder mehrere (K2 bis K4) der Konfigurationsmittel (K1 bis K7) (ein) optische(s) Element(e) umfasst/umfassen, das/die einen oder mehrere Parameter der Strahlung ändert/n, moduliert/en und/oder umschaltet/n,
bevorzugt das/die eine/die Richtung, eine/die Kohärenz, eine/die Wellenlänge, eine/die Intensität und/oder einen/den spektralen Aufspaltungszustand im Senderstrahlengang (1-S) und/oder im Empfangsstrahlengang (1-E) und/oder einen Versatz zwischen dem Senderstrahlengang (1-S) einerseits und dem Empfangsstrahlengang (1-E) andererseits ändert/n, moduliert/en, umschaltet/n und/oder bewirkt/en.

4. Retroreflektorbasiertes Sensorsystem nach einem der vorhergehenden Ansprüche,
***dadurch gekennzeichnet, dass***
eines (K5) der Konfigurationsmittel (K1 bis K7) der Empfänger (3) selbst ist, indem dieser (3) so ausgebildet ist, dass aus der von ihm (3) detektierten Strahlung (S_{RR}) sowie durch ihn (3) oder durch eine Auswerteeinheit des Sensorsystems der vollständige Polarisationszustand dieser Strahlung (S_{RR}) oder der komplette Stokesvektor dieser Strahlung (S_{RR}) bestimmbar ist, insbesondere berechenbar ist.

5. Retroreflektorbasiertes Sensorsystem nach einem der vorhergehenden Ansprüche,
***dadurch gekennzeichnet, dass***
eines (K6) oder mehrere der Konfigurationsmittel (K1 bis K7) (ein) Mittel zum Erlangen zusätzlicher Informationen über die Probe (P) und/oder über die Strahlung des Senderstrahlengangs (1-S) ist/sind,
wobei bevorzugt das/die Mittel zum Erlangen zusätzlicher Informationen (ein) Sensor(en), (eine) Kamera(s) und/oder (ein) Informationsspeicher, bevorzugt (ein) Informationsspeicher einer/der Auswerteeinheit des Sensorsystems, enthaltend die zusätzlichen Informationen, ist/sind,
und/oder
wobei bevorzugt die zusätzlichen Informationen sind oder umfassen:
• Die Pose, also sowohl die Position als auch die Orientierung, die Position oder die Orientierung der Probe (P) relativ zum Sender (1), Retroreflektor (2), Empfänger (3) und/oder zur auf sie (P) einfallenden Strahlung,
• Daten über die Beschaffenheit der Probe oder deren Oberfläche, insbesondere Geometriedaten der Probe,
• den Einfallswinkel der auf die Probe (P) im Senderstrahlengang (1-S) einfallenden Strahlung,
und/oder
• einen oder mehrere Neigungswinkel einer oder mehrerer definierten/r Achse(n) der Probe (P) gegen ein definiertes Koordinatensystem des Empfängers (3).

6. Retroreflektorbasiertes Sensorsystem nach einem der vorhergehenden Ansprüche,
***dadurch gekennzeichnet, dass***
eines oder mehrere der Konfigurationsmittel (K1 bis K7) (ein) Mittel zum Normieren der Messwerte ist/sind.

7. Retroreflektorbasiertes Sensorsystem nach einem der vorhergehenden Ansprüche,
***dadurch gekennzeichnet, dass***
eines oder mehrere der Konfigurationsmittel (K1 bis K7) im Senderstrahlengang (1-S), im Empfangsstrahlengang (1-E), im/am Sender (1), im/am Retroreflektor (2), im/am Empfänger (3), in/an einem Gehäuse (4) umschließend oder enthaltend sowohl den Sender (1) als auch den Empfänger (3) positioniert oder ausgebildet ist/sind, oder so vorgesehen ist/sind, dass mit ihm/ihnen die Probe (P), der Retroreflektor (2) oder eines der Konfigurationsmittel optisch abtastbar ist, beispielsweise mittels eines Bildsensors, insbesondere einer Kamera, abbildbar ist.

8. Retroreflektorbasiertes Sensorsystem nach einem der vorhergehenden Ansprüche,
***dadurch gekennzeichnet, dass***
der Sender (1), der Retroreflektor (2) und der Empfänger (3) so ausgebildet und positioniert sind, dass (die) am Retroreflektor (2) zurückreflektierte Strahlung sich, relativ zum Senderstrahlengang (1-S) gesehen, in zumindest Abschnitten des Empfangsstrahlengangs (1-E) auf identischem Weg ausbreitet oder auf einem dazu versetzten Weg ausbreitet, also mit Strahlversatz zum Senderstrahlengang (1-S).

9. Retroreflektorbasiertes Sensorsystem nach einem der vorhergehenden Ansprüche,
***dadurch gekennzeichnet, dass***
der Sender (1), die Probe (P) und der Retroreflektor (2) in Reflexionsanordnung positioniert sind, dass also im Senderstrahlengang (1-S) vom Sender (1) herkommendes und auf die Probe (P) eingestrahltes Licht an der Probe (P) reflektiert wird, von dort (P) herkommend auf den Retroreflektor (2) einfällt (Sₑ), vom Retroreflektor (2) in den Empfangsstrahlengang (1-E) und auf die Probe (P) zurückreflektiert wird, an der Probe (P) erneut reflektiert wird und schließlich als zweifach an der Probe (P) reflektierte Strahlung (S_{RR}) vom Empfänger (3) detektiert wird,
oder
dass der Sender (1), die Probe (P) und der Retroreflektor (2) in Transmissionsanordnung positioniert sind, dass also im Senderstrahlengang (1-S) vom Sender (1) herkommendes und auf die Probe (P) eingestrahltes Licht durch die Probe (P) hindurch transmittiert wird, von dort (P) herkommend auf den Retroreflektor (2) einfällt (Sₑ), vom Retroreflektor (2) in den Empfangsstrahlengang (1-E) und auf die Probe (P) zurückreflektiert wird, erneut durch die Probe (P) hindurch transmittiert wird und schließlich als zweifach durch die Probe (P) hindurch transmittierte Strahlung (S_{RR}) vom Empfänger (3) detektiert wird.

10. Retroreflektorbasiertes Sensorsystem nach einem der vorhergehenden Ansprüche,
***dadurch gekennzeichnet, dass***
der Sender (1) und der Empfänger (3) nebeneinander, unmittelbar benachbart zueinander oder möglichst nahe beieinander positioniert sind,
oder
dass der Empfänger (3) in einem Raumbereich positioniert ist, in dem auch der Sender (1) positioniert ist,
oder
dass der Sender (1) und der Empfänger (3) in(nerhalb) ein und dasselbe/desselben Gehäuse(s) (4) integriert oder positioniert sind.

11. Retroreflektorbasiertes Sensorsystem nach einem der vorhergehenden Ansprüche,
***dadurch gekennzeichnet, dass***
der Sender (1) und der Empfänger (3) als Punktmesssystem ausgebildet sind, also einen punktförmigen Bereich der Probe (P) abtasten,
oder
dass der Sender (1) und der Empfänger (3) als Scannersystem ausgebildet sind, also einen eindimensionalen, d.h. linienförmigen, Bereich der Probe (P) oder einen zweidimensionalen, d.h. flächenförmigen, Bereich der Probe (P) abtasten.

## Claims

1. Retroreflector-based sensor system for optical characterisation of a sample (P), having
a transmitter (1) for irradiating the sample (P) which is positioned in the transmitter beam path (1-S),
a retroreflector (2) which is positioned behind the sample (P) in the transmitter beam path (1-S) such that it reflects radiation (Sₑ) in the transmitter beam path (1-S) coming from the sample (P) and incident thereon in the receiving beam path (1-E) back onto the sample (P),
the transmitter (1), the sample (P) and the retroreflector (2) being positioned such that radiation reflected back from the retroreflector (2) in the receiving beam path (1-E) is again incident on the sample (P) and is reflected back from the latter (P) in the direction towards the transmitter (1), and
a receiver (3) which is positioned in the receiving beam path (1-E) such that it detects radiation (S_{RR}) reflected back from the retroreflector (2), incident again on the sample (P) and reflected back from the latter (P), in the direction towards the transmitter (1),
from the radiation (S_{RR}) detected by the receiver (3), measured values being obtainable and evaluable for optical characterisation of the sample (P),
***characterised in that***
at least one configuration means (K1 to K7) being provided, by means of which improved obtaining and/or evaluation of the measured values is possible, for improved optical characterisation of the sample (P),
wherein
- one (K3) of the configuration means (K1 to K7) being configured to modulate or switch a polarisation state of the illumination in the transmitter beam path (1-S) between positively circularly polarised and negatively circularly polarised states
- the retroreflector-based sensor system is configured to correct ellipsometric measurements by determining, from the values measured by the receiver under positively and negatively circularly polarized illumination for an isotropic sample, a rotational position of a surface normal of the sample (P) relative to a preferred direction of the receiver (3).

2. Retroreflector-based sensor system according to the preceding claim,
***characterised in that***
one (K1) or more of the configuration means (K1 to K7) is/are configured and/or positioned in order to move the transmitter (1), the sample (P), the retroreflector (2) and/or the receiver (3), in particular mechanically, whilst the radiation (S_{RR}) is detected by the receiver (3).

3. Retroreflector-based sensor system according to one of the preceding claims,
***characterised in that***
one or more (K2 to K4) of the configuration means (K1 to K7) include/s (an) optical element(s) which change/s, modulate/s and/or switch/es one or more parameters of the radiation,
preferably which change/s, modulate/s, switch/es and/or effect/s a/the polarisation state, a/the direction, a/the coherence, a/the wavelength, an/the intensity and/or a/the spectral splitting state in the transmitter beam path (1-S) and/or in the receiving beam path (1-E), and/or an offset between the transmitter beam path (1-S), on the one hand, and the receiving beam path (1-E), on the other hand.

4. Retroreflector-based sensor system according to one of the preceding claims,
***characterised in that***
one (K5) of the configuration means (K1 to K7) is the receiver (3) itself, by the latter (3) being configured such that, from the radiation (S_{RR}) detected by it (3) and also by it (3) or by an evaluation unit of the sensor system, the entire polarisation state of this radiation (S_{RR}) or the complete Stokes vector of this radiation (S_{RR}) can be determined, in particular can be calculated.

5. Retroreflector-based sensor system according to one of the preceding claims,
***characterised in that***
one (K6) or more of the configuration means (K1 to K7) is/are (a) means for obtaining additional information about the sample (P) and/or about the radiation of the transmitter beam path (1-S),
preferably the means for obtaining additional information being (a) sensor(s), (a) camera(s) and/or (an) information memory(ies), preferably (an) information memory(ies) of an/the evaluation unit of the sensor system, comprising the additional information,
and/or
preferably the additional information being or comprising:
• the pose, i.e. both the position and the orientation, the position or the orientation, of the sample (P) relative to the transmitter (1), retroreflector (2), receiver (3) and/or to the radiation incident on it (P),
• data about the property of the sample or the surface thereof, in particular geometric data of the sample,
• the angle of incidence of the radiation which is incident on the sample (P) in the transmitter beam path (1-S),
and/or
• one or more angle(s) of inclination of one or more defined axis/axes of the sample (P) relative to a defined coordinate system of the receiver (3).

6. Retroreflector-based sensor system according to one of the preceding claims,
***characterised in that***
one or more of the configuration means (K1 to K7) is/are (a) means for standardisation of the measured values.

7. Retroreflector-based sensor system according to one of the preceding claims,
***characterised in that***
one or more of the configuration means (K1 to K7) is/are positioned or configured in the transmitter beam path (1-S), in the receiving beam path (1-E), in/on the transmitter (1), in/on the retroreflector (2), in/on the receiver (3), in/on a housing (4) including or comprising both the transmitter (1) and the receiver (3), or is/are provided such that the sample (P), the retroreflector (2) or one of the configuration means can be scanned optically by it/them, for example can be imaged by means of an image sensor, in particular a camera.

8. Retroreflector-based sensor system according to one of the preceding claims,
***characterised in that***
the transmitter (1), the retroreflector (2) and the receiver (3) are configured and positioned such that (the) radiation which is reflected back at the retroreflector (2), viewed relative to the transmitter beam path (1-S), widens in at least portions of the receiving beam path (1-E) on the identical path or widens on a path offset thereto, i.e. with a beam offset relative to the transmitter beam path (1-S).

9. Retroreflector-based sensor system according to one of the preceding claims,
***characterised in that***
the transmitter (1), the sample (P) and the retroreflector (2) are positioned in reflection arrangement, the light coming therefore from the transmitter (1) in the transmitter beam path (1-S) and radiated onto the sample (P) is reflected at the sample (P), coming from there (P) is incident (Sₑ) on the retroreflector (2), is reflected back from the retroreflector (2) into the receiving beam path (1-E) and onto the sample (P), is reflected again at the sample (P) and finally is detected by the receiver (3) as radiation (S_{RR}) which has been reflected twice at the sample (P),
or
**in that** the transmitter (1), the sample (P) and the retroreflector (2) are positioned in transmission arrangement, the light coming therefore from the transmitter (1) in the transmitter beam path (1-S) and radiated onto the sample (P) is transmitted through the sample (P), coming from there (P) is incident (Sₑ) on the retroreflector (2), is reflected back by the retroreflector (2) into the receiving beam path (1-E) and onto the sample (P), is transmitted again through the sample (P) and finally is detected by the receiver (3) as radiation (S_{RR}) which has been transmitted twice through the sample (P).

10. Retroreflector-based sensor system according to one of the preceding claims,
***characterised in that***
the transmitter (1) and the receiver (3) are positioned adjacent to each other, directly adjacent to each other or as closely adjacent to each other as possible,
or
**in that** the receiver (3) is positioned in a spatial region in which the transmitter (1) is also positioned,
or
**in that** the transmitter (1) and the receiver (3) are integrated or positioned in(inside) one and the same housing (4).

11. Retroreflector-based sensor system according to one of the preceding claims,
***characterised in that***
the transmitter (1) and the receiver (3) are configured as a point-measuring system, i.e. scan a point-like region of the sample (P)
or
**in that** the transmitter (1) and the receiver (3) are configured as a scanner system, i.e. scan a one-dimensional, i.e. linear, region of the sample (P) or a two-dimensional, i.e. planar, region of the sample (P).

## Revendications

1. Système de capteur à rétroréflecteur permettant une caractérisation optique d'un échantillon (P), comprenant
un émetteur (1) permettant d'irradier l'échantillon (P) positionné sur un trajet de faisceau d'émetteur (1-S),
un rétroréflecteur (2) qui est positionné sur le trajet de faisceau d'émetteur (1-S) derrière l'échantillon (P) de sorte qu'il réfléchit le rayonnement (Se) l'impactant en provenance de l'échantillon (P) sur le trajet de faisceau d'émetteur (1-S) vers l'échantillon (P) sur un trajet de faisceau de réception (1-E),
dans lequel l'émetteur (1), l'échantillon (P) et le rétroréflecteur (2) sont positionnés de sorte que le rayonnement réfléchi par le rétroréflecteur (2) sur le trajet de faisceau de réception (1-E) impacte à nouveau l'échantillon (P) et est réfléchi par ledit échantillon (P) en direction de l'émetteur (1), et
un récepteur (3) qui est positionné sur le trajet de faisceau de réception (1-E) de sorte qu'il détecte le rayonnement (S_{RR}) réfléchi par le rétroréflecteur (2), impactant à nouveau l'échantillon (P) et réfléchi par ledit échantillon (P) en direction de l'émetteur (1),
dans lequel des valeurs de mesure peuvent être obtenues et évaluées à partir du rayonnement (S_{RR}) détecté par le récepteur (3), en vue d'une caractérisation optique de l'échantillon (P),
**caractérisé en ce que**
au moins un moyen de configuration (K1 à K7) est prévu, au moyen duquel une obtention et/ou une évaluation améliorée(s) des valeurs de mesure est/sont possible(s), en vue d'une caractérisation optique améliorée de l'échantillon (P),
dans lequel
- un moyen de configuration (K3) parmi les moyens de configuration (K1 à K7) est conçu pour moduler ou commuter un état de polarisation de l'illumination sur le trajet de faisceau d'émetteur (1-S) entre des états de polarisation circulaire positive et des états de polarisation circulaire négative,
- le système de capteur à rétroréflecteur est conçu, pour corriger des mesures ellipsométriques, de déterminer une position rotationnelle d'une normale de surface de l'échantillon (P) par rapport à une direction préférée du récepteur (3) à partir des valeurs déterminées par le récepteur sous un éclairage à polarisation circulaire positive et sous un éclairage à polarisation circulaire négative pour un échantillon isotrope.

2. Système de capteur à rétroréflecteur selon la revendication précédente,
***caractérisé en ce que***
un moyen de configuration (K1) ou plusieurs des moyens de configuration (K1 à K7) est/sont conçu(s) et/ou positionné(s) pour déplacer, en particulier pour déplacer mécaniquement, l'émetteur (1), l'échantillon (P), le rétroréflecteur (2) et/ou le récepteur (3) tandis que le rayonnement (S_{RR}) est détecté par le récepteur (3).

3. Système de capteur à rétroréflecteur selon l'une quelconque des revendications précédentes,
***caractérisé en ce que***
un ou plusieurs moyen(s) de configuration (K2 à K4) parmi les moyens de configuration (K1 à K7) comprend ou comprennent un ou des élément(s) optique(s) qui module(nt) et/ou commute(nt) un ou plusieurs paramètre(s) du rayonnement,
de manière préférée qui modifie(nt), module(nt), commute(nt) et/ou provoque(nt) une direction, une cohérence, une longueur d'onde, une intensité et/ou un état de division spectrale sur le trajet de faisceau d'émetteur (1-S) et/ou sur le trajet de faisceau de réception (1-E) et/ou un décalage entre le trajet de faisceau d'émetteur (1-S) d'une part et le trajet de faisceau de réception (1-E) d'autre part.

4. Système de capteur à rétroréflecteur selon l'une quelconque des revendications précédentes,
***caractérisé en ce que***
un moyen de configuration (K5) parmi les moyens de configuration (K1 à K7) est le récepteur (3) lui-même, en ce sens que ledit récepteur (3) est conçu de sorte que l'état de polarisation complet dudit rayonnement (SRR) ou le vecteur de Stokes complet dudit rayonnement (S_{RR}) peut être déterminé, en particulier calculé, à partir du rayonnement (SRR) détecté par ledit récepteur (3), ainsi que grâce au dit récepteur (3) ou grâce à une unité d'évaluation du système de capteur.

5. Système de capteur à rétroréflecteur selon l'une quelconque des revendications précédentes,
***caractérisé en ce que***
un moyen de configuration (K6) ou plusieurs des moyens de configuration (K1 à K7) est/sont un ou des moyen(s) permettant d'obtenir des informations supplémentaires sur l'échantillon (P) et/ou sur le rayonnement du trajet de faisceau d'émetteur (1-S),
dans lequel de manière préférée le(s) moyen(s) permettant d'obtenir des informations supplémentaires est/sont un ou des capteur(s), une ou des caméra(s) et/ou un ou des dispositif(s) de stockage d'informations, de manière préférée un ou des dispositif(s) de stockage d'informations d'une unité d'évaluation du système de capteur, contenant les informations supplémentaires,
et/ou
dans lequel les informations supplémentaires sont ou comprennent de manière préférée :
• la pose, c'est-à-dire la position et l'orientation, ou la position ou l'orientation de l'échantillon (P) par rapport à l'émetteur (1), au rétroréflecteur (2), au récepteur (3) et/ou par rapport au rayonnement impactant ledit échantillon (P),
• des données sur la nature de l'échantillon ou de sa surface, en particulier des données géométriques de l'échantillon,
• l'angle d'impact du rayonnement impactant l'échantillon (P) sur le trajet de faisceau d'émetteur (1S),
et/ou
• un ou plusieurs angle(s) d'inclinaison d'un ou de plusieurs axe(s) défini(s) de l'échantillon (P) par rapport à un système de coordonnées défini du récepteur (3).

6. Système de capteur à rétroréflecteur selon l'une quelconque des revendications précédentes,
***caractérisé en ce que***
un ou plusieurs des moyens de configuration (K1 à K7) est/sont un ou des moyen(s) permettant de normaliser les valeurs de mesure.

7. Système de capteur à rétroréflecteur selon l'une quelconque des revendications précédentes,
***caractérisé en ce que***
un ou plusieurs des moyens de configuration (K1 à K7) est/sont positionné(s) ou formé(s) sur le trajet de faisceau d'émetteur (1-S), sur le trajet de faisceau de récepteur (1-E), dans/au niveau de l'émetteur (1), dans/au niveau du rétroréflecteur (2), dans/au niveau du récepteur (3), dans/au niveau d'un boîtier (4) renfermant ou contenant à la fois l'émetteur (1) et le récepteur (3), ou est/sont fourni(s) de sorte que l'échantillon (P), le rétroréflecteur (2) ou un des moyens de configuration peut être scanné de manière optique par celui-ci ou ceux-ci, par exemple au moyen d'un capteur d'image, en particulier au moyen d'une caméra.

8. Système de capteur à rétroréflecteur selon l'une quelconque des revendications précédentes,
***caractérisé en ce que***
l'émetteur (1), le rétroréflecteur (2) et le récepteur (3) sont conçus et positionnés de sorte que, considéré par rapport au trajet de faisceau d'émetteur (1-S), le rayonnement réfléchi au niveau du rétroréflecteur (2) se propage dans au moins des sections du trajet de faisceau de réception (1-E) sur un chemin identique ou sur un chemin décalé par rapport à celui-ci, c'est-à-dire avec un décalage de faisceau par rapport au trajet de faisceau d'émetteur (1-S).

9. Système de capteur à rétroréflecteur selon l'une quelconque des revendications précédentes,
***caractérisé en ce que***
l'émetteur (1), l'échantillon (P) et le rétroréflecteur (2) sont positionnés selon un agencement de réflexion de sorte que la lumière provenant de l'émetteur (1) et impactant l'échantillon (P) sur le trajet de faisceau d'émetteur (1-S) est réfléchie sur l'échantillon (P), de là impacte (Se) le rétroréflecteur (2) en provenance de (P), est renvoyée à partir du rétroréflecteur (2) sur le trajet de faisceau de réception (1-E) et vers l'échantillon (P), est à nouveau réfléchie sur l'échantillon (P) et est finalement détectée par le récepteur (3) en tant que rayonnement (SRR) réfléchi deux fois sur l'échantillon (P),
ou
**en ce que** l'émetteur (1), l'échantillon (P) et le rétroréflecteur (2) sont positionnés selon un agencement de transmission de sorte que la lumière provenant de l'émetteur (1) et impactant l'échantillon (P) sur le trajet de faisceau d'émetteur (1-S) est transmise à travers l'échantillon (P), de là impacte (Sₑ) le rétroréflecteur (2) en provenance de (P), est renvoyée à partir du rétroréflecteur (2) sur le trajet de faisceau de réception (1-E) et vers l'échantillon (P), est transmise à nouveau à travers l'échantillon (P) et est finalement détectée par le récepteur (3) en tant que rayonnement (S_{RR}) transmis deux fois à travers l'échantillon (P).

10. Système de capteur à rétroréflecteur selon l'une quelconque des revendications précédentes,
***caractérisé en ce que***
l'émetteur (1) et le récepteur (3) sont positionnés l'un à côté de l'autre, en étant immédiatement adjacents ou aussi proches que possible l'un de l'autre,
ou
**en ce que** le récepteur (3) est positionné dans une région spatiale dans laquelle est également positionné l'émetteur (1),
ou
**en ce que** l'émetteur (1) et le récepteur (3) sont intégrés ou positionnés dans (à l'intérieur de) un seul et même boîtier (4).

11. Système de capteur à rétroréflecteur selon l'une quelconque des revendications précédentes,
***caractérisé en ce que***
l'émetteur (1) et le récepteur (3) sont conçus comme un système de mesure ponctuelle, c'est-à-dire qu'ils scannent une région ponctuelle de l'échantillon (P),
ou
**en ce que** l'émetteur (1) et le récepteur (3) sont conçus comme un système de scanner, c'est-à-dire qu'ils scannent une région unidimensionnelle, c'est-à-dire présentant une forme de ligne, de l'échantillon (P) ou une région bidimensionnelle, c'est-à-dire présentant une forme de surface, de l'échantillon (P).
